# EUROPEAN PATENT SPECIFICATION

(11) **EP 4 428 575 B1**
(45) Date of publication and mention of the grant of the patent: **21.10.2026**
(21) Application number: 23781191.4
(22) Date of filing: 09.03.2023
(51) Int. Cl.: G01S 15/52, G01S 5/18, H04R 3/00, G06N 20/00, G01S 11/14, G01S 7/52, G01S 15/04, G01S 15/08, G01S 15/42, G01S 15/88, G01S 15/50

(54) **ELECTRONIC DEVICE AND SYSTEM FOR LOCATION INFERENCE**
ELEKTRONISCHE VORRICHTUNG UND SYSTEM ZUR STANDORTINFERENZ
DISPOSITIF ÉLECTRONIQUE ET SYSTÈME D'INFÉRENCE D'EMPLACEMENT

(30) Priority: 28.03.2022 KR 20220038381; 02.09.2022 KR 20220111688
(43) Date of publication of application: 11.09.2024
(73) Proprietor: Samsung Electronics Co., Ltd., Suwon-si, Gyeonggi-do 16677 (KR)
(72) Inventor: LEE, Dongseop, Suwon-si, Gyeonggi-do 16677 (KR); CHOI, Hyungjun, Suwon-si, Gyeonggi-do 16677 (KR); LEE, Daniel Dongyuel, Suwon-si, Gyeonggi-do 16677 (KR); YANG, Dojun, Suwon-si, Gyeonggi-do 16677 (KR)
(74) Representative: Gulde & Partner
(86) International application number: PCT/KR2023/003224
(87) International publication number: WO 2023/191333

(56) References cited:
- KR-A- 20140 069 069
- KR-A- 20170 010 170
- KR-A- 20190 013 264
- KR-A- 20210 063 341
- KR-B1- 101 678 305
- US-A1- 2016 154 089
- US-B1- 10 795 018

## Description

### TECHNICAL FIELD

The disclosure relates to an electronic device and a system for localization of an object in a spatial structure. More particularly, the disclosure relates to an electronic device and a system for adaptively generating a signal optimized for the spatial structure and performing localization of an object in the spatial structure, based on the optimized signal.

### BACKGROUND ART

With the development of information technology (IT), various types of electronic devices, such as a smart television (TV), an artificial intelligence (AI) speaker, a home appliance product, a smartphone, a tablet personal computer (PC), etc., have been connected in an Internet of things (IOT) environment. Significant research has been conducted into localization techniques due to the large commercial and social value thereof in the IOT environment. Generally, according to the indoor localization techniques, localization is performed via an analysis with respect to a static structure. Recently, localization techniques for defining a predetermined transmission signal via a transmission terminal and performing cross correlation matching based on a received signal to analyze a temporal change of a correlation analysis with respect to a dynamic object, have been attempted.

Because a localization result varies depending on ambient conditions, such as a spatial structure, a device configured to output a signal, or a temperature, there is a continuous increase in demand for a localization technique with high accuracy.

US 2016/154089 A1 discloses an apparatus and a method for detecting presence of persons or objects within an environment. The apparatus and method may determine a difference in relative position between transmitters having an unknown room position. A transmitter may emit coded signals that may be detected by other transmitters within the room and properties of the coded signal can form a baseline for comparison to new signals after the baseline is established. Through the use of coded signals and relative distance location between transmitters, movement and position of persons or objects within the room may be determined.

US 10795018 B1 discloses presence-detection devices that detect movement of a person in an environment by emitting ultrasonic signals into the environment, and characterizing the change in the frequency, or the Doppler shift, of the reflections of the ultrasonic signals off the person caused by the movement of the person. In addition to detecting movement, and thus presence of a person, the presence-detection devices may include a microphone array to perform techniques for identifying a direction of movement of the person, and also to perform techniques for identifying a number of people that are in the room. Additionally, the techniques described herein include processing audio signals in such a way to allow for the use of on-board loudspeakers to transmit ultrasonic signals at out-of-band frequencies.

### DESCRIPTION OF EMBODIMENTS SOLUTION TO PROBLEM

The present invention is defined by the appended set of claims, Preferred embodiments are defined by the dependent claims.

According to an embodiment of the disclosure, an electronic device configured to perform localization includes a speaker, one or more microphones, a memory storing one or more instructions, and one or more processors configured to execute the one or more instructions stored in the memory to perform signal waveform optimization for the localization, the signal waveform optimization comprising the operations: (a) obtain a first parameter set corresponding to a current generation (b) control the speaker to output a plurality of candidate signals based on the first parameter set, wherein the plurality of candidate signals are acoustic signals of an inaudible frequency band that are not recognized by the hearing sense of a human being, (c) control the one or more microphones to receive first reflected wave signals which are the plurality of candidate signals reflected by a spatial structure, (d) obtain a fitness value with respect to each of the plurality of candidate signals based on the first reflected wave signals, (e) determine a completion condition, indicating whether or not a performance value based on the fitness value with respect to each of the plurality of candidate signals exceeds a first threshold value, (f) based on the completion condition being not satisfied, obtain a second parameter set corresponding to a next generation based on a correlation between the performance value and the first parameter set, (g) based on the completion condition being not satisfied, iteratively perform the operations of (b) to (f) by replacing the current generation with the next generation, and (h) based on the completion condition being satisfied, obtain a final parameter set corresponding to a final signal from among the plurality of candidate signals, the performance value of the final signal exceeding the first threshold value, and obtain a reference signal corresponding to the final signal.

At least one of the first parameter set or the second parameter may include a plurality of sub-parameter sets corresponding to one of the plurality of candidate signals, and at least one of the plurality of sub-parameter sets or the final parameter set may include at least one of a waveform feature function, a waveform location function, or a time window of a signal corresponding to the sub-parameter sets or the final parameter set, the waveform feature function may include a value of at least one of an amplitude, a cycle, or a shape of the corresponding signal, and the waveform location function may include a value of at least one of a frequency range, a frequency interval, or a latency of the corresponding signal.

The fitness value may include a stability value and an identification value, the stability value may be a similarity value between a measurement value of any one of the first reflected wave signals corresponding to a first time point and a measurement value of the first reflected wave signal corresponding to a second time point, and the identification value may be a signal similarity value between any one of the plurality of candidate signals and the first reflected wave signal corresponding to the candidate signal.

The performance value may be a return value of a decision function having the stability value and the identification value of each of the plurality of candidate signals as variables, and the decision function may be configured to return the performance value by applying a weight to any one of the stability value and the identification value.

The one or more processors may be further configured to execute the one or more instructions to obtain analysis data corresponding to the correlation, select the waveform feature function and the time window based on the analysis data and the performance value, and obtain the second parameter set by performing at least one of a cross-over operation or a mutation operation on at least one of the selected waveform feature function or the selected time window.

The one or more processors may be further configured to execute the one or more instructions to obtain the waveform location function based on at least one of the performance value, the selected waveform feature function, or the selected time window.

The one or more processors may be further configured to execute the one or more instructions to select a first set having the waveform feature function and the time window, the stability value of the first set exceeding a second threshold value, select a second set having the waveform feature function and the time window, the identification value of the second set exceeding a third threshold value, and select a third set having the waveform feature function and the time window, the stability value of the third set exceeding a fourth threshold value, and the identification value of the third set exceeding a fifth threshold value.

The one or more processors may be further configured to execute the one or more instructions to perform the cross-over operation on the first set and the second set, perform the mutation operation on the third set, and obtain the second parameter set based on a result of the cross-over operation and a result of the mutation operation.

The one or more processors may be further configured to execute the one or more instructions to obtain ambient condition information comprising at least one of a temperature, an atmospheric pressure, a humidity, or a density of a space in which the electronic device is located, obtain a velocity of sound of the space based on the ambient condition information, and obtain, further based on the velocity of sound, the second parameter set corresponding to the next generation.

The one or more processors may be further configured to execute the one or more instructions to obtain the second parameter set by using a second machine learning model using at least one of ambient condition information, the fitness value, or the first parameter set as an input.

According to an embodiment of the disclosure, a method of performing signal waveform optimization for localization, the method being performed by an electronic device and the method comprising: (a) obtaining a first parameter set corresponding to a current generation, (b) controlling a speaker of the electronic device to output a plurality of candidate signals, based on the first parameter set, wherein the plurality of candidate signals are acoustic signals of an inaudible frequency band that are not recognized by the hearing sense of a human being, (c) controlling one or more microphones of the electronic device to receive first reflected wave signals which are the plurality of candidate signals reflected by a spatial structure, (d) obtaining a fitness value with respect to each of the plurality of candidate signals based on the first reflected wave signals, (e) determining a completion condition indicating whether or not a performance value based on the fitness value, with respect to each of the plurality of candidate signals exceeds a first threshold value, and (f) based on the completion condition being not satisfied, obtaining a second parameter set corresponding to a next generation based on a correlation between the performance value and the first parameter set, (g) based on the completion condition being not satisfied, iteratively performing the operations of (b) to (f) by replacing the current generation with the next generation, and (h) based on the completion condition being satisfied, obtaining a final parameter set corresponding to a final signal from among the plurality of candidate signals, the performance value of the final signal exceeding the first threshold value, and obtaining a reference signal corresponding to the final signal.

At least one of the first parameter set or the second parameter may include a plurality of sub-parameter sets corresponding to one of the plurality of candidate signals, at least one of the plurality of sub-parameter sets or the final parameter set may include at least one of a waveform feature function, a waveform location function, or a time window of a signal corresponding to the sub-parameter sets or the final parameter set, the waveform feature function may include a value of at least one of an amplitude, a cycle, or a shape of the corresponding signal, and the waveform location function may include a value of at least one of a frequency range, a frequency interval, or a latency of the corresponding signal.

The fitness value may include a stability value and an identification value, the stability value may be a similarity value between a measurement value of any one of the first reflected wave signals corresponding to a first time point and a measurement value of the first reflected wave signal corresponding to a second time point, and the identification value may be a signal similarity value between any one of the plurality of candidate signals and the first reflected wave signal corresponding to the candidate signal.

The performance value may be a return value of a decision function having the stability value and the identification value of each of the plurality of candidate signals as variables, and the decision function may be configured to return the performance value by applying a weight to any one of the stability value and the identification value.

The obtaining of the second parameter set may include obtaining analysis data corresponding to the correlation, selecting the waveform feature function and the time window based on the analysis data and the performance value, and obtaining the second parameter set by performing at least one of a cross-over operation or a mutation operation on at least one of the selected waveform feature function or the selected time window.

The obtaining of the second parameter set further may include obtaining the waveform location function based on at least one of the performance value, the selected waveform feature function, or the selected time window.

The selecting of the waveform feature function and the time window based on the analysis data and the performance value may include selecting a first set having the waveform feature function and the time window, the stability value of the first set exceeding a second threshold value, selecting a second set having the waveform feature function and the time window, the identification value of the second set exceeding a third threshold value, and selecting a third set having the waveform feature function and the time window, the stability value of the third set exceeding a fourth threshold value, and the identification value of the third set exceeding a fifth threshold value.

The obtaining of the second parameter set by performing the cross-over operation and the mutation operation on the at least one of the selected waveform feature function or the selected time window may include performing the cross-over operation on the first set and the second set, performing the mutation operation on the third set, and obtaining the second parameter set based on a result of the cross-over operation and a result of the mutation operation.

The obtaining of the second parameter set may include obtaining ambient condition information comprising at least one of a temperature, an atmospheric pressure, a humidity, or a density of a space, obtaining a velocity of sound of the space based on the ambient condition information, and obtaining the second parameter set corresponding to the next generation further based on the velocity of sound.

The obtaining of the second parameter set may include obtaining the second parameter set by using a second machine learning model using at least one of the ambient condition information, the fitness value, or the first parameter set as an input.

### BRIEF DESCRIPTION OF DRAWINGS

FIG. 1 is a block diagram of an example of an electronic device according to an embodiment of the disclosure.
FIGS. 2A to 2C are conceptual diagrams showing an example of a method, performed by an electronic device, of generating a signal optimized for a spatial structure, according to an embodiment of the disclosure.
FIGS. 3A to 3D are flowcharts of a method of performing signal waveform optimization for localization, according to an embodiment of the disclosure.
FIG. 4A is a conceptual diagram for describing a correlation according to an embodiment of the disclosure.
FIG. 4B is a conceptual diagram for describing a selection of a waveform location function, according to an embodiment of the disclosure.
FIG. 4C is a scatter plot diagram for describing a cross-over operation and a mutation operation, according to an embodiment of the disclosure.
FIG. 4D is a conceptual diagram for describing a waveform location between candidate signals, according to an embodiment of the disclosure.
FIG. 5 is a conceptual diagram showing an example of a method, performed by an electronic device, of using a signal optimized for a spatial structure, according to an embodiment of the disclosure.
FIGS. 6A to 6C are flowcharts of a method of performing signal processing for localization, according to an embodiment of the disclosure.
FIGS. 7A to 7B are graphs showing an example of a reception intensity of a reflected wave signal, according to an embodiment of the disclosure.
FIG. 8 is a graph showing an example of a machine learning model for obtaining object location information, according to an embodiment of the disclosure.
FIGS. 9Ato 9D are graphs showing an example of a result of localization, according to an embodiment of the disclosure.
FIG. 10 is a block diagram of an example of a system according to an embodiment of the disclosure.
FIG. 11 is a conceptual diagram showing an example of a method, performed by a system, of generating a signal optimized for a spatial structure, according to an embodiment of the disclosure.
FIGS. 12A and 12B are conceptual diagrams showing an example of a method, performed by a system, of using a signal optimized for a spatial structure, according to an embodiment of the disclosure.
FIGS. 13A and 13B are conceptual diagrams showing an example of a method, performed by a system, of selecting a wake-up device, according to an embodiment of the disclosure.

### MODE OF DISCLOSURE

In this specification, a spatial structure may be understood as a structure of a space in which an electronic device is located. For example, the spatial structure may be understood as a boundary of the space, (an) object(s) located in the space, and/or a characteristic of the space formed by a relationship between the boundary of the space and the object(s) located in the space. Thus, the spatial structure may vary according to a space or the characteristics of a space. For example, when a space is changed (for example, a location of an electronic device is changed to a space different from a previous space) or a characteristic of the space is changed (for example, the location of the electronic device is changed to another location in the same space, a location of an object in the space is changed, etc.), the electronic device may recognize the changed spatial structure.

In this specification, localization may denote a function of obtaining information about a location of an object or a movement of the object in the spatial structure.

**In** this specification, a parameter set may be a set of sub-parameter sets. Each of the sub-parameter sets may include a waveform feature function and a waveform location function of a signal (for example, one of a plurality of candidate signals) corresponding to each of the sub-parameter sets.

**In** this specification, the waveform feature function may include at least one parameter indicating an intrinsic characteristic of the corresponding signal. For example, the waveform feature function may include a parameter corresponding to a value of at least one of an amplitude, a cycle, or a shape of the corresponding signal, but the waveform feature function is not limited thereto. For example, the shape of the signal may include a sine wave, triangle wave, a sawtooth wave, a square wave, a pulse wave, or a combination thereof.

**In** this specification, the waveform location function may include at least one parameter indicating a location of the corresponding signal in a frequency domain or a time domain. For example, the waveform location function may include a parameter corresponding to a value of at least one of a frequency range (or band), a frequency interval, or a latency, but the waveform location function is not limited thereto.

**In** this specification, a time window may denote a frame, which is a reflected wave signal (for example, an echo chirp signal) corresponding to a transmitted signal (for example, a chirp signal), the reflected wave signal being received and divided in a time domain. For example, the reflected wave signal may be divided into a plurality of sub-signals to have a plurality of time windows. For example, a first sub-signal may correspond to a first time frame, and a second sub-signal may correspond to a second time frame.

In this specification, a stability value may denote a value indicating a similarity between measurement values (for example, distances) corresponding to a signal at n time points (or time windows) in a time domain of the signal (for example, a reflected wave signal). For example, the stability value may include a similarity between a first distance value measured based on the reflected wave signal at a first time window and a second distance value measured based on the reflected wave signal at a second time window. The stability value may be referred to as a robustness value. An identification value may denote a value indicating a signal similarity between a direct wave signal (for example, an inaudible acoustic signal) and a reflected wave signal.

In this specification, a generation may denote a set of a plurality of signals generated by using a genetic algorithm. For example, the genetic algorithm may be iteratively performed, and a signal set in a current iteration may be referred to as a current generation, and a signal set in a next iteration may be referred to as a next generation. In this specification, the genetic algorithm may also be referred to as a waveform optimization module or a waveform optimization model.

In this specification, a wake-up device denotes a device configured to respond to a user's keyword sound input. The wake-up device may operate in a first standby mode configured to receive the keyword sound input. The wake-up device may operate in a second standby mode configured to receive an additional sound input in response to the keyword sound input. That is, when the wake-up device is switched from the first standby mode to the second standby mode, the wake-up device may "wake-up."

In this specification, an expression, such as "excellent" or "an excellent value," denotes a case where a value is greater than or less than a pre-defined threshold value.

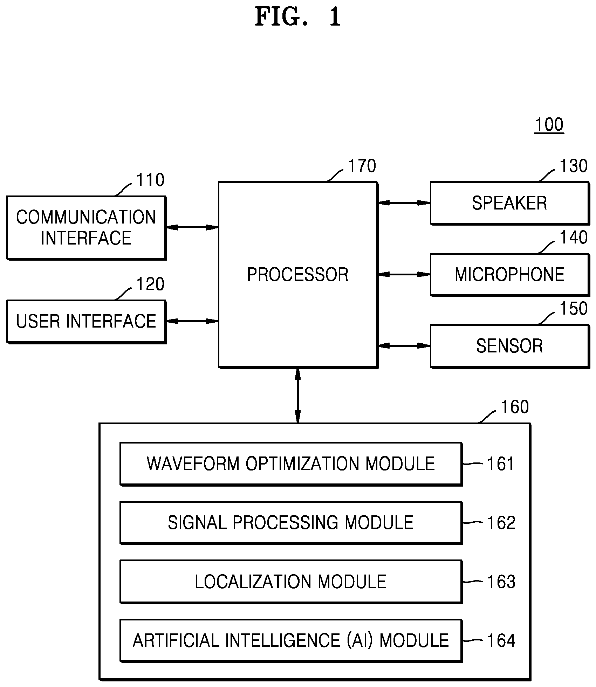

FIG. 1 is a block diagram of an example of an electronic device 100 according to an embodiment of the disclosure.

According to an embodiment of the disclosure, the electronic device 100 may be configured to transmit and receive an acoustic signal (also referred to as an audio signal or a sound signal) and process the acoustic signal. For example, the electronic device 100 may be implemented as various devices, such as a cellular phone, a smartphone, a tablet personal computer (PC), a digital camera, a camcorder, a laptop computer, a desktop computer, an electronic book reader, a digital broadcasting terminal, a personal digital assistant (PDA), a portable multimedia player (PMP), an MP3 player, a wearable device, home appliances (for example, a television (TV), a refrigerator, an air conditioner, an air cleaner, etc.), an artificial intelligence (AI) speaker, a robot, etc. However, the electronic device 100 is not limited thereto.

The electronic device 100 may recognize a spatial structure in which the electronic device 100 is located, based on the acoustic signal. The electronic device 100 may perform a processing operation for optimizing the acoustic signal based on the spatial structure.

According to an embodiment of the disclosure, the acoustic signal may include a signal of an inaudible frequency band (hereinafter, an inaudible acoustic signal). According to the disclosure, by using the inaudible acoustic signal that is not recognized by the hearing sense of a human being, the electronic device 100 may monitor a change of the spatial structure or a movement of an object in real time without causing inconvenience to the human being.

Referring to FIG. 1, the electronic device 100 may include a communication interface 110, a user interface 120, a speaker 130, a microphone 140, a sensor 150, a memory 160, and a processor 170.

The communication interface 110 may support establishment of a wired or wireless communication channel between the electronic device 100 and another external electronic device (not shown) or a server (not shown) and communication through the established communication channel. According to an embodiment of the disclosure, the communication interface 110 may receive or transmit data from or to the other external electronic device or the server through wired or wireless communication. According to an embodiment of the disclosure, the communication interface 110 may include a wireless communication module (for example, a cellular communication module, a short-range wireless communication module, or a global navigation satellite system (GNSS) communication module) or a wired communication module (for example, a local area network (LAN) communication module or a power line communication module) and may use any one communication module among the communication modules to perform communication with the other external electronic device or the server through at least one network (for example, a short-range wireless communication network (e.g., Bluetooth, Wifi direct, or infrared data association (IrDA)) or a remote communication network (e.g., a cellular network, the Internet, or a computer network (e.g., a **LAN** or a wide area network (WAN))).

The user interface 120 may denote a device used by a user to input data for controlling the electronic device 100. For example, the user interface 120 may include at least one of a key pad, a dome switch, a touch pad (a touch capacitance method, a pressure resistive-layer method, an infrared sensing method, a surface ultrasonic conduction method, an integral tension measurement method, a piezo effect method, etc.), a jog wheel, or a jog switch, but is not limited thereto. According to an embodiment of the disclosure, the user interface 120 may be omitted. In this case, at least a portion of the function of the user interface 120 may be implemented by another external electronic device (not shown).

The speaker 130 may output an inaudible acoustic signal. Also, the speaker 130 may be used for the purpose of reproducing multimedia or recording. Although not shown, the number of speakers 130 may be at least one. In this case, each of the speakers may be arranged in the electronic device 100 at a different angle (or in a different direction) from each other to output an inaudible acoustic signal at the different angle. For example, the inaudible acoustic signal may be a chirp signal.

The microphone 140 may receive a reflected wave signal which is the inaudible acoustic signal reflected by a spatial structure. Also, the microphone 140 may receive a user's voice input, etc. In this case, the microphone 140 may perform at least a portion of the function of the user interface 120. Although not shown, the microphone 140 may include one or more microphones. In this case, each of the microphones may be arranged in the electronic device 100 at a different angle (or in a different direction) from each other to receive the reflected wave signal output toward the electronic device 100 at a different angle.

The sensor 150 may sense an ambient condition of the electronic device 100 and may generate ambient condition information which is an electrical signal or a data value corresponding to the sensed ambient condition. Here, the ambient condition information may include information about at least one of a temperature, an atmospheric pressure, a humidity, or a density of a space in which the electronic device 100 is located. According to an embodiment of the disclosure, the sensor 150 may be omitted. In this case, at least a portion of the function of the sensor 150 may be implemented by another external electronic device (not shown). The electronic device 100 may receive ambient condition information generated by the other external electronic device through the communication interface 110.

The memory 160 may store data, firmware, software, a process code, and the like processed or to be processed by the processor 170. According to an embodiment of the disclosure, the memory 160 may store data and program codes corresponding to at least one of a waveform optimization module 161, a signal processing module 162, a localization module 163, an AI module 164, or an AI model.

For example, the waveform optimization module 161 may be configured to optimize a waveform of an inaudible acoustic signal based on the spatial structure. The waveform optimization module 161 may be configured to obtain a final inaudible acoustic signal (or referred to as a final signal) optimized for the spatial structure, by using a waveform optimization model having a plurality of inaudible acoustic signals (or referred to as a plurality of candidate signals) as inputs. The signal processing module 162 may be configured to process various signals that are output through the speaker 130. The localization module 163 may be configured to localize an object based on the inaudible acoustic signal and the reflected wave signal corresponding to the inaudible acoustic signal.

The AI module 164 may be configured to train an AI model (for example, a deep learning model, a machine learning model, etc.). Although not shown, the number of AI modules 164 or AI models may be at least one according to a function or a purpose. According to an embodiment of the disclosure, the AI module 164 may be configured to optimize the waveform of the inaudible acoustic signal, by using the trained AI model. According to an embodiment of the disclosure, the AI module 164 may be configured to perform a regression analysis with respect to a correlation between pieces of data, by using the trained AI model. According to an embodiment of the disclosure, the AI module 164 may be configured to perform clustering with respect to a correlation between pieces of data, by using the trained AI model. According to an embodiment of the disclosure, the AI module 164 may be configured to localize the object, by using the trained AI model.

The AI model may include a plurality of neural network layers. Each of the plurality of neural network layers may include weight values. The AI model may modify and renew the weight values of the neural network layers of the AI model by learning a training data set.

The memory 160 may be used as a main memory device of the electronic device 100. For example, the memory 160 may include at least one type of storage medium from among a flash memory type, a hard disk type, a multimedia card micro type, a card-type memory (for example, secure digital (SD) or extreme digital (XD) memory or the like), dynamic random-access memory (DRAM), static random-access memory (SRAM), phase-change random-access memory (PRAM), magnetic random-access memory (MRAM), ferroelectric random-access memory (FeRAM), resistive random-access memory (RRAM), read-only memory (ROM), electrically erasable programmable read-only memory (EEPROM), programmable read-only memory (PROM), a magnetic memory, a magnetic disk, and an optical disk. The memory 160 may be referred to as a buffer memory, a working memory, or a cache memory. Although not shown, the number of memories 160 may be at least one.

The processor 170 may be electrically connected to the components included in the electronic device 100 and configured to perform an operation or data processing in relation to controlling and/or communication of the components included in the electronic device 100. For example, the processor 170 may include at least one of a central processing unit (CPU), an application processor (AP), a graphic processing unit (GPU), or a neural processing unit (NPU). According to an embodiment of the disclosure, the processor 170 may be configured to process a command or data received from at least one of other components by loading the command or data in the memory 160 and may store resultant data in the memory 160. Although not shown, the processor 170 may include one or more processors according to a function or a purpose. In this case, the one or more processors 170 may be configured to perform the operation or the data processing in relation to the controlling and/or the communication of the components included in the electronic device 100 in a distributed fashion. For example, the electronic device 100 may further include an additional processor for executing the AI module 164, for example, an NPU.

The processor 170 may be configured to obtain a signal change amount based on a correlation between a reference signal corresponding to the inaudible acoustic signal ( referred to as a final inaudible acoustic signal) and the received reflected wave signal. Here, the reference signal denotes a signal, which is a reference for comparison with the reflected wave signal, and the reference signal may be pre-defined. For example, the reference signal may be a reflected wave signal received in a situation in which there is no change of a spatial structure, no change of an ambient condition, or no movement of an object. The reference signal may vary according to an inaudible acoustic signal and a spatial structure. The reference signal or values corresponding to the reference signal may be stored in the memory 160. The reflected wave signal may be a signal, which is the inaudible acoustic signal reflected by the spatial structure after being output from the speaker 130 and then input into the microphone 140.

When the signal change amount exceeds a first threshold value corresponding to a movement of an object, the processor 170 may be configured to obtain, based on the signal change amount, object location information corresponding to a location of the object in the spatial structure. The first threshold value may be a reference value for determining whether the signal is changed because the location of the object is changed or because there is another reason. For example, when the signal change amount does not exceed the first threshold value corresponding to the movement of the object, it may be understood that the signal change amount occurs because a location (or a direction) of the electronic device 100 is changed or there is another factor, rather than because the location of the object is changed in the spatial structure. Thus, when the signal change amount does not exceed the first threshold value corresponding to the movement of the object, the processor 170 may be configured to determine that the location of the object is not changed.

When the signal change amount exceeds a second threshold value corresponding to a change of the spatial structure, the processor 170 may be configured to update a final parameter set corresponding to the inaudible acoustic signal by using a waveform optimization model. The second threshold value may be a reference value for determining whether or not the spatial structure is changed. When the signal change amount does not exceed the second threshold value, the processor 170 may be configured to determine that there is no change in the spatial structure.

According to an embodiment of the disclosure, the change of the spatial structure may include a change of an ambient condition (for example, a temperature, an atmospheric pressure, a humidity, a density, etc.) of a space in which the electronic device 100 is located. The electronic device 100 may obtain data (that is, ambient condition information) corresponding to the ambient condition through the sensor 150, etc. In response to the change of the ambient condition, the electronic device 100 may update the final parameter set corresponding to the inaudible acoustic signal by using the waveform optimization model. Thus, even when the ambient condition is changed, the final parameter set corresponding to the inaudible acoustic signal optimized for the changed ambient condition may be updated.

According to an embodiment of the disclosure, the first threshold value may be greater than the second threshold value. According to an embodiment of the disclosure, whether or not the signal change amount exceeds the first threshold value and whether or not the signal change amount exceeds the second threshold value may be identified based on the signal change amount in different time sections from each other.

According to an embodiment of the disclosure, when the signal change amount exceeds a third threshold value corresponding to a change of the ambient condition, the processor 170 may be configured to update the final parameter set corresponding to the inaudible acoustic signal by using the waveform optimization model. The third threshold value may be a reference value for determining whether or not the ambient condition of the space is changed. When the signal change amount does not exceed the third threshold value, the processor 170 may be configured to determine that there is no change in the ambient condition.

According to an embodiment of the disclosure, the processor 170 may be configured to obtain a first parameter set corresponding to a current generation. For example, the first parameter set may include a feature of a plurality of candidate signals included in the current generation. According to an embodiment of the disclosure, when the current generation is an initial generation, the processor 170 may be configured to obtain a predetermined or pre-defined first parameter set.

The processor 170 may be configured to control, based on the first parameter set, the speaker 130 to output the plurality of candidate signals. For example, the plurality of candidate signals may be signals of an inaudible band (that is, the inaudible acoustic signal). According to an embodiment of the disclosure, the plurality of candidate signals may be output by having a predetermined time interval and/or a predetermined frequency interval with respect to each other.

The processor 170 may be configured to control the at least one microphone 140 to receive reflected wave signals which are the plurality of candidate signals reflected by the spatial structure.

The processor 170 may be configured to obtain fitness value(s) with respect to the plurality of candidate signals, based on the reflected wave signals respectively corresponding to the plurality of candidate signals. That is, the processor 170 may be configured to obtain the fitness value with respect to each of the plurality of candidate signals. According to an embodiment of the disclosure, the fitness value may include a stability value and/or an identification value.

According to an embodiment of the disclosure, the processor 170 may be configured to calculate a performance value based on the fitness value. According to an embodiment of the disclosure, the performance value may be a return value of a decision function having the stability value and the identification value of each of the plurality of candidate signals as variables. According to an embodiment of the disclosure, the decision function may return the performance value by applying a weight to any one of the stability value and the identification value.

The processor 170 may be configured to determine a completion condition, which is whether or not the performance value corresponding to the fitness value exceeds a completion threshold value. The completion threshold value may be pre-defined according to a configuration of a user or a manufacturer. For example, the completion threshold value may correspond to at least one of whether or not the performance value is converged, the number of generation replacements (the number of iterations), or a target value of the performance value.

When the completion condition is not satisfied, the processor 170 may be configured to obtain, based on a correlation between the performance value and the first parameter set, a second parameter set corresponding to a next generation.

According to an embodiment of the disclosure, the processor 170 may be configured to obtain analysis data corresponding to the correlation between the performance value and the first parameter set. For example, the correlation may include a correlation between the performance value and an amplitude of the signal, a correlation between the performance value and a waveform of the signal, a correlation between the performance value and a cycle of the signal, or the like, but is not limited thereto. Thus, the correlation may include a correlation between features of the signal in the first parameter set, for example, a correlation between the amplitude of the signal and the waveform of the signal. For example, the analysis data may include a correlation coefficient, interrelationship, a degree of sensitivity, etc. between an input variable (for example, the waveform feature function, the time window, and/or the waveform location function) and an output value (for example, the performance value and/or the fitness value).

According to an embodiment of the disclosure, the processor 170 may be configured to perform an uncertainty analysis and a sensitivity analysis to obtain the analysis data corresponding to the correlation between the performance value and the first parameter set.

According to an embodiment of the disclosure, the processor 170 may be configured to use a clustering model having the performance value and the first parameter set as inputs, in order to obtain the analysis data corresponding to the correlation between the performance value and the first parameter set. For example, the clustering model may include K-Means clustering, mean shift, a Gaussian mixture model, DBSCAN, agglomerative clustering, etc., but is not limited thereto.

The processor 170 may be configured to select the waveform feature function and the time window based on the analysis data and the performance value. According to an embodiment of the disclosure, the processor 170 may be configured to classify and select the waveform feature function and the time window based on the stability value and the identification value. For example, when at least one of the stability value or the identification value of a set having a predetermined waveform feature function and a predetermined time window has a relatively higher impact in a result value of a function based on the stability value and the identification value, the processor 170 may be configured to select the corresponding set.

For example, the processor 170 may be configured to select a first set having a waveform feature function and a time window, the stability value of the first set exceeding a first reference value (or referred to as a threshold value). For example, the processor 170 may be configured to select a second set having a waveform feature function and a time window, the identification value of the second set exceeding a second reference value. For example, the processor 170 may be configured to select a third set having a waveform feature function and a time window, the stability value of the third set exceeding a third reference value, and the identification value of the third set exceeding a fourth reference value.

The processor 170 may be configured to obtain the second parameter set by performing at least one of a cross-over operation or a mutation operation on at least one of the selected waveform feature function or the selected time window.

According to an embodiment, the processor 170 may be configured to perform a cross-over operation on the first set and the second set and a mutation operation on the third set. The processor 170 may be configured to obtain the second parameter set based on a result of the cross-over operation and a result of the mutation operation.

According to an embodiment of the disclosure, the processor 170 may be configured to obtain the waveform location function based on at least one of the performance value, the selected waveform feature function, or the selected time window.

According to an embodiment of the disclosure, when the completion condition is not satisfied, the processor 170 may be configured to replace the current generation with a next generation and iteratively determine the completion condition.

When the completion condition is satisfied, the processor 170 may be configured to obtain a final parameter set corresponding to a signal (for example, a final signal), the performance value of the signal exceeding the completion threshold value, from among the plurality of candidate signals. The processor 170 may be configured to update the final parameter set based on the obtained final parameter set. According to an embodiment of the disclosure, the processor 170 may be configured to obtain a reference signal corresponding to an inaudible acoustic signal having the final parameter set. The reference signal may correspond to a reflected wave signal which is the inaudible acoustic signal reflected by a spatial structure.

According to an embodiment of the disclosure, the waveform optimization model may be trained to output the final parameter set when the signal change amount and the ambient condition information are input into the waveform optimization model. Thus, the processor 170 may be configured to obtain the final parameter set from the signal change amount and the ambient condition information, by using the waveform optimization model.

According to an embodiment of the disclosure, object location information may include distance information corresponding to a distance between the electronic device 100 and an object and angle information corresponding to an angle formed by the electronic device 100 and the object. According to an embodiment of the disclosure, the object location information may include a coordinate value (for example, (x, y)) of the object having the electronic device 100 as a starting point (for example, (0, 0)).

According to an embodiment of the disclosure, the processor 170 may be configured to obtain the distance information based on an inaudible acoustic signal. According to an embodiment of the disclosure, the processor 170 may be configured to obtain the angle information by using a machine learning model having the distance information as an input. For example, the machine learning model may be trained to output the angle information when the distance information is input into the machine learning model.

According to an embodiment of the disclosure, the processor 170 may be configured to obtain the object location information (for example, the coordinate value) based on a reflected wave signal corresponding to the optimized inaudible acoustic signal. Here, the reflected wave signal may denote a plurality of signals classified into time windows in a pre-defined time interval. That is, the processor 170 may be configured to obtain the object location information by using the machine learning model having the plurality of signals corresponding to the reflected wave signal as an input. For example, the machine learning model may be trained to output the object location information when the plurality of signals corresponding to the reflected wave signal are input into the machine learning model.

According to an embodiment of the disclosure, a loss function of the machine learning model may be implemented as mean square error (MSE), but is not limited thereto. For example, the loss function of the machine learning model may be implemented as a predetermined function representing a difference between a model prediction value and an actual value, such as root mean square error (RMSE), binary cross entropy, categorical cross entropy, etc.

According to an embodiment of the disclosure, the processor 170 may be configured to obtain ambient condition information including at least one of a temperature, an atmospheric pressure, a humidity, or a density of a space in which the electronic device 100 is located. The processor 170 may be configured to obtain a velocity of sound of the space based on the ambient condition information. The processor 170 may be configured to obtain a second parameter set further based on the velocity of sound. According to an embodiment of the disclosure, the sensor 150 may be configured to sense a temperature, an atmospheric pressure, a humidity, a density, etc. of the space. The ambient condition information may be generated based on the temperature, the atmospheric pressure, the humidity, the density, etc. sensed by the sensor 150.

According to an embodiment of the disclosure, the processor 170 may be configured to obtain the second parameter set based on the machine learning model having at least one of the ambient condition information, the fitness value, or the first parameter set as an input.

According to an embodiment, the components of the electronic device 100 are not limited to what are illustrated in FIG. 1. The electronic device 100 may additionally include components not illustrated in FIG. 1.

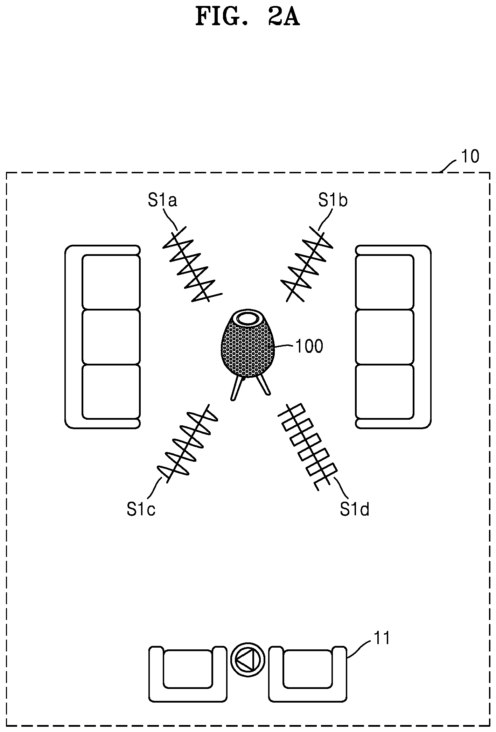

FIGS. 2A to 2C are conceptual diagrams showing an example of a method, performed by an electronic device, of generating a signal optimized for a spatial structure 10, according to an embodiment of the disclosure. For convenience of explanation, descriptions of configurations that are the same as described in FIG. 1 are omitted.

Referring to FIG. 2A together with FIG. 1, the electronic device 100 may obtain a first parameter set corresponding to a current generation. The first parameter set may include a plurality of sub-parameter sets. Each of the plurality of sub-parameter sets may correspond to one of a plurality of candidate signals. For example, a first sub-parameter set of the plurality of sub-parameter sets may be a combination of parameters indicating at least one of a waveform feature function, a waveform location function, or a time window of a first candidate signal of the plurality of candidate signals. A second sub-parameter set of the plurality of sub-parameter sets may be a combination of parameters indicating at least one of a waveform feature function, a waveform location function, or a time window of a second candidate signal of the plurality of candidate signals. Likewise, an n^{th} sub-parameter set of the plurality of sub-parameter sets may be a combination of parameters indicating at least one of a waveform feature function, a waveform location function, or a time window of an n^{th} candidate signal of the plurality of candidate signals. For example, n may be a natural number.

The electronic device 100 may output a plurality of candidate signals (for example, S1a, S1b, S1c, and S1d) based on the first parameter set. For convenience of explanation, only the four signals are illustrated. However, the disclosure is not limited thereto. The plurality of candidate signals (for example, S1a, S1b, S1c, and S1d) may have a frequency of an inaudible sound band. For example, the plurality of candidate signals (for example, S1a, S1b, S1c, and S1d) may be chirp signals.

The electronic device 100 may output each of the plurality of candidate signals (for example, S1a, S1b, S1c, and S1d) during a pre-defined time. The electronic device 100 may sequentially output each of the plurality of candidate signals (for example, S1a, S1b, S1c, and S1d). For example, the electronic device 100 may output the candidate signal S1a during a pre-defined time, and after a pre-defined latency, may output the candidate signal S2a during the pre-defined time.

The electronic device 100 may output the candidate signal (for example, S1a) based on a waveform location function corresponding to the candidate signal (for example, S1a). For example, the electronic device 100 may output the candidate signal (for example, S1a) within a pre-defined frequency range. For example, the pre-defined frequency range may be at least a portion of a frequency range of the inaudible sound band. For example, the electronic device 100 may output the candidate signal S1a within a first frequency range and the candidate signal S1b within a second frequency range. According to an embodiment of the disclosure, the first frequency range and the second frequency range may be apart from each other by a pre-defined frequency distance.

According to an embodiment of the disclosure, the electronic device 100 may include a first speaker and a second speaker. Signals output by the first speaker and the second speaker may be different from each other. For example, the first speaker may output the candidate signal S1a, and the second speaker may output the candidate signal S1b.

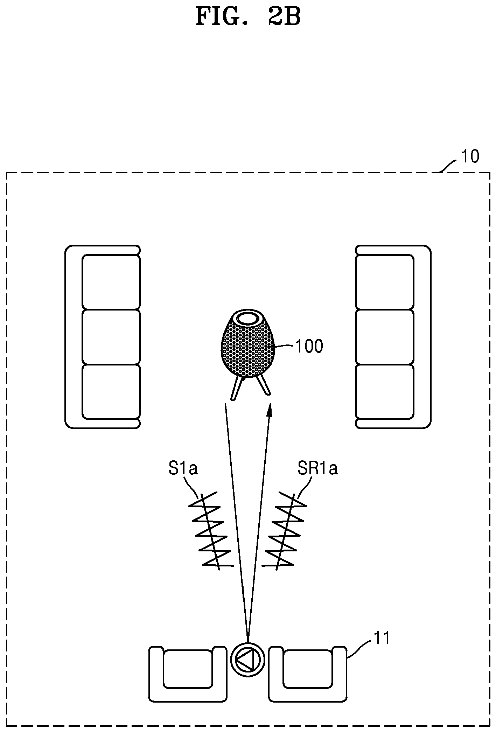

Referring to FIG. 2B, together with FIGS. 1 and 2A, the electronic device 100 may receive first reflected wave signals which are the plurality of candidate signals reflected by a spatial structure 10. The spatial structure 10 may include an object 11 (for example, a piece of furniture, a home appliance, a wall, etc.). For example, the candidate signal S1a may be reflected by the object 11. The electronic device 100 may receive a reflected signal, that is, a first reflected wave signal SR1a.

According to an embodiment of the disclosure, the electronic device 100 may include a first microphone and a second microphone. Each of the first microphone and the second microphone may receive the first reflected wave signal.

The electronic device 100 may obtain fitness values with respect to the plurality of candidate signals based on the received first reflected wave signals. The fitness values may include a stability value and an identification value.

According to an embodiment of the disclosure, the electronic device 100 may divide the received first reflected wave signal (for example, SR1a) by a pre-defined time interval. The electronic device 100 may generate, based on the received first reflected wave signal (for example, SR1a), a plurality of sub-signals divided into time windows having pre-defined time intervals. For example, the first reflected wave signal (for example, SR1a) may be divided into n sub-signals in a time domain. For example, a first sub-signal may correspond to a first time window, a second sub-signal may correspond to a second time window, and an n^{th} sub-signal may correspond to an n^{th} time window.

According to an embodiment of the disclosure, the plurality of sub-signals may be preprocessed to be suitable for a signal analysis. For example, the electronic device 100 may perform operations, such as noise removal, planarization, abnormality removal, spurious removal, detrending, filtering, etc., based on the plurality of sub-signals.

The electronic device 100 may calculate, based on the plurality of sub-signals, the stability value of the candidate signal S1a corresponding to the first reflected wave signal (for example, SR1a). For example, the stability value may be calculated through cross correlation between the sub-signals of the time windows adjacent to each other.

According to an embodiment of the disclosure, the stability value may denote a similarity between values measured based on the plurality of sub-signals. For example, the electronic device 100 may calculate, based on the plurality of sub-signals, distance values between the electronic device 100 and the object 11. For example, the electronic device 100 may calculate a first distance value based on the first sub-signal and a second distance value based on the second sub-signal. However, the disclosure is not limited to the distance values. The electronic device 100 may calculate a predetermined value indicating an intrinsic feature of the spatial structure 10. The electronic device 100 may calculate, based on the distance values, the stability value of the candidate signal S1a corresponding to the first reflected wave signal (for example, SR1a).

According to an embodiment of the disclosure, the electronic device 100 may obtain ambient condition information from the sensor 150 or an external device. The electronic device 100 may calculate a velocity of sound based on the ambient condition information. For example, the velocity of sound may be calculated based on a temperature in the spatial structure 10 of the ambient condition information, and the following [Equation 1] may be complied. [Equation 1] ${v}_{sound} = 331.5 + 0.61 \times {T}_{C}$

Referring to Equation 1, Tc is defined as a Celsius temperature, and V_{sound} is defined as a velocity of sound. Thus, the electronic device 100 may obtain the Celsius temperature in the spatial structure 10 and calculate the velocity of sound in the spatial structure 10 based on the obtained Celsius temperature. For example, the correlation formula between the velocity of sound and the temperature is described. However, the electronic device 100 may obtain elements determining the velocity of sound and calculate the velocity of sound based on a correlation formula between the velocity of sound and the elements. The electronic device 100 may calculate the distance value based on the velocity of sound, the candidate signal (for example, S1a), and the reflected wave signal (for example, SR1a).

According to an embodiment of the disclosure, the stability value may be calculated based on a standard deviation of the distance values calculated based on the sub-signals. In this case, as the stability value is decreased, it may be assessed that the stability or the robustness of the corresponding candidate signal (for example, S1a) is excellent.

According to an embodiment of the disclosure, the stability value may be in accordance with the following Equation 2. [Equation 2] ${f}_{S _ smt} = \sqrt{{\sum }_{i = 1}^{n} \frac{{\left({\hat{N}}_{sm \left(t-1\right) _ i}-{N}_{smt _ i}\right)}^{2}}{n}}$

Referring to Equation 2, s is defined as an identifier of a speaker, m is defined as an identifier of a microphone, t is defined as an identifier of a time window, i is defined as a separate index of a signal corresponding to the time window, and n is defined as the number of indices of the signal corresponding to the time window. Also, *N̂* is defined as a value corresponding to a directly previous time window t-1, and *N* is defined as a value corresponding to a current time window t. *f_{S_smt}* is defined as a stability value of a case in which the speaker is s, the microphone is m, and the time window is t. However, Equation 2 is only an example for a calculation of the stability value, and a predetermined equation may be used for the calculation of the similarity between the values corresponding to the time windows of the reflected wave signal.

The electronic device 100 may calculate, based on the plurality of sub-signals, an identification value of the candidate signal (for example, S1a) corresponding to the first reflected wave signal (for example, SR1a). For example, the identification value may be calculated through cross correlation between the candidate signal (for example, S1a) and the first reflected wave signal (for example, SR1a) corresponding to the candidate signal (for example, S1a). According to an embodiment of the disclosure, before the cross correlation, the electronic device 100 may disassemble the harmonics of the first reflected wave signal (for example, SR1a).

According to an embodiment of the disclosure, the identification value may be in accordance with the following Equation 3. [Equation 3] ${f}_{ID _ smt} = \sqrt{{\sum }_{i = 1}^{n} \frac{{\left({\dot{N}}_{smt _ i}-{N}_{smt _ i}\right)}^{2}}{n}}$

Referring to Equation 3, s is defined as an identifier of a speaker, m is defined as an identifier of a microphone, t is defined as an identifier of a time window, i is defined as a separate index of a signal corresponding to the time window, and n is defined as the number of indices of the signal corresponding to the time window. Also,

*Ṅ* is defined as a value corresponding to an original signal (for example, a candidate signal), and *N* is defined as a value corresponding to a reflected wave signal which is the original signal reflected by the spatial structure 10. *f_{ID_smt}* is defined as an identification value of a case in which the speaker is s, the microphone is m, and the time window is t. However, Equation 3 is only an example for a calculation of the identification value, and a predetermined equation for calculating a similarity between the original signal and the reflected wave signal may be used.

The electronic device 100 may calculate a performance value based on the fitness value. The performance value may be a return value of a decision function having the stability value and the identification value of each of the plurality of candidate signals as variables. For example, the decision function may be in accordance with the following Equation 4. [Equation 4] ${F}_{P _ smt} = min \left(\frac{1}{{f}_{S _ smt} + {f}_{ID _ smt}}\right)$

Referring to Equation 4, *F_{P_smt}* is defined as a performance value of a candidate signal of a case in which a speaker is s, a microphone is m, and a time window is t. However, Equation 4 is only an example for a calculation of the performance value, and a predetermined equation having at least one of the stability value or the identification value as a variable may be used.

The electronic device 100 may determine whether or not the performance value corresponding to the fitness value exceeds a completion threshold value (hereinafter, a completion condition). As the performance value is increased, it may be assessed that the quality of signal is excellent. When the performance value exceeds a pre-defined completion threshold value, the completion condition may be satisfied.

On the contrary, as the performance value is decreased, it may be assessed that the quality of the signal isexcellent. When the performance value is less than or equal to (or is less than) the pre-defined completion threshold value, the completion condition may be satisfied. For example, the completion condition may be in accordance with the following Equation 5. [Equation 5] ${F}_{P} \left({f}_{S _ smt} ,{f}_{ID _ smt}\right) \leq {θ}_{P}$

Referring to Equation 5, θ*_{P}* is defined as a completion threshold value. When the performance value exceeds θ*_{P}*, the electronic device 100 may determine that the completion condition isnot satisfied. When the performance value is less than or equal to θ*_{P}*, the electronic device 100 may determine that the completion condition is satisfied.

According to an embodiment of the disclosure, the electronic device 100 may determine with respect to the convergence by comparing performance values corresponding to previous generations with performance values of a current generation. When at least one of the performance values of the current generation is converged into a particular value, the completion condition may be satisfied.

According to an embodiment of the disclosure, the electronic device 100 may count the number of operations of determining the completion condition. The counted number may be the same as the number of operations of replacing generations. When the counted number exceeds a threshold number, the completion condition may be satisfied.

When the completion condition is satisfied, the electronic device 100 may store a sub-parameter set of a candidate signal having the performance value satisfying the completion condition. For example, the sub-parameter set may be stored in the memory 160 or a storage (not shown).

When the completion condition is not satisfied, the electronic device 100 may obtain, based on a correlation between the performance value and a first parameter set, a second parameter set corresponding to a next generation. The electronic device 100 may replace the current generation with the next generation. That is, the first parameter set may be replaced with the second parameter set.

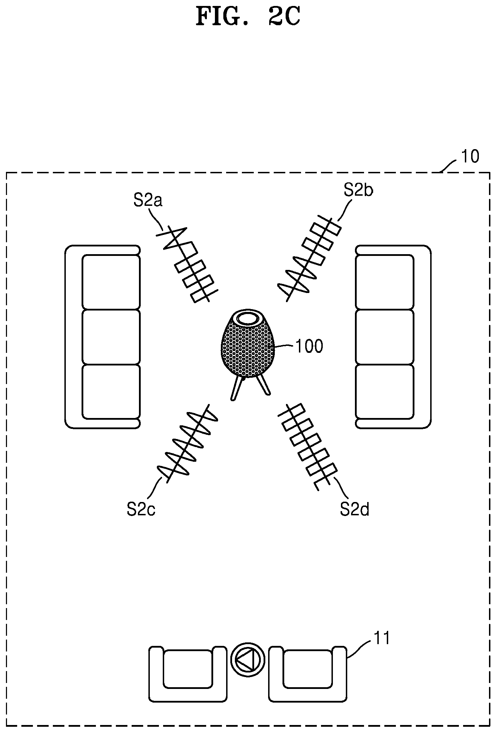

Referring to FIG. 2C, together with FIGS. 1, 2A, and 2B, the electronic device 100 may output a plurality of candidate signals (for example, S2a, S2b, S2c, and S2d) based on the replaced first parameter set (that is, the second parameter set) corresponding to the replaced current generation (that is, the next generation). The electronic device 100 may obtain performance values based on reflected wave signals of the plurality of candidate signals (for example, S2a, S2b, S2c, and S2d). The electronic device 100 may iteratively replace the generations until the completion condition is satisfied based on the performance values.

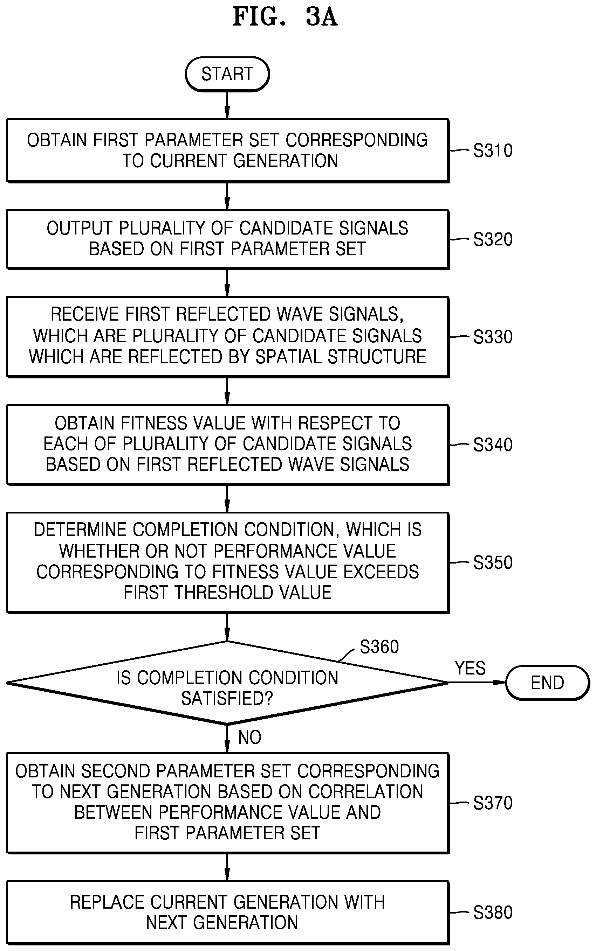

FIGS. 3A to 3D are flowcharts of a method of performing signal waveform optimization for localization, according to an embodiment of the disclosure. For convenience of explanation, configurations that are the same as described in FIGS. 1 to 2C are not described.

Referring to FIG. 3A, together with FIGS. 1 to 2C, the method, performed by the electronic device 100, of performing signal waveform optimization for localization, may include operations S310 to S380. According to an embodiment of the disclosure, operations S310 to S380 may be performed by the electronic device 100 or the processor 170. In examples not according to the invention, the method of performing signal waveform optimization for localization may omit any one of the operations illustrated in FIG. 3A. The method of performing signal waveform optimization for localisation may further include operations not illustrated in FIG. 3A.

In operation S310, the electronic device 100 may obtain a first parameter set corresponding to a current generation. The first parameter set may include a sub-parameter set of each of a plurality of candidate signals. According to an embodiment of the disclosure, the electronic device 100 may obtain the first parameter set from the memory 160 or a storage. According to an embodiment of the disclosure, the electronic device 100 may obtain the first parameter set from an external device.

In operation S320, the electronic device 100 may output a plurality of candidate signals based on the first parameter set. The processor 170 may be configured to control, based on the first parameter set, the at least one speaker 130 to output the plurality of candidate signals. The at least one speaker 130 may be configured to output the plurality of candidate signals. For example, the electronic device 100 may include a first speaker and a second speaker, and the number of speakers is not limited thereto. The first speaker and the second speaker may output the candidate signals that are the same as or different from each other. According to an embodiment of the disclosure, the plurality of candidate signals may be output according to a pre-defined time interval.

In operation S330, the electronic device 100 may receive first reflected wave signals which are the plurality of candidate signals reflected by the spatial structure 10. The processor 170 may be configured to control the at least one microphone 140 to receive the first reflected wave signals which are the plurality of candidate signals reflected by the spatial structure 10. The at least one microphone 140 may be configured to receive the first reflected wave signals. For example, the electronic device 100 may include a first microphone and a second microphone, and the number of microphones is not limited thereto. According to an embodiment of the disclosure, the processor 170 may be configured to perform preprocessing on the received first reflected wave signals.

In operation S340, the electronic device 100 may obtain, based on the first reflected wave signals, fitness values with respect to the plurality of candidate signals. The processor 170 may be configured to calculate the fitness value with respect to each of the plurality of candidate signals.

In operations S350 and S360, the electronic device 100 may determine a completion condition, which is whether or not a performance value corresponding to the fitness value exceeds a first threshold value. When the completion condition is satisfied (Yes), the procedure is ended. When the completion condition is not satisfied (No), the procedure is not ended and proceeds to operation S370.

In operation S370, the electronic device 100 may obtain, based on a correlation between the performance value and the first parameter set, a second parameter set corresponding to a next generation.

In operation S380, the electronic device 100 may replace a current generation with the next generation, and the procedure proceeds to operation S320.

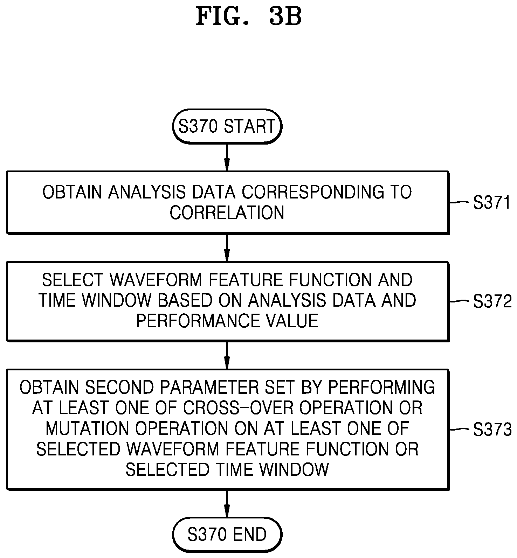

Referring to FIG. 3B, together with FIGS. 1 to 3A, operation S370 according to an embodiment of the disclosure may include operations S371 to S373. According to an embodiment of the disclosure, operations S371 to S373 may be performed by the electronic device 100 or the processor 170. Detailed operations of operation S370 are not limited to what are illustrated in FIG. 3B and any one of the operations illustrated in FIG. 3B may be omitted or the operations may further include operations not illustrated in FIG. 3B.

In operation S371, the electronic device 100 may obtain analysis data corresponding to the correlation. For example, the processor 170 may be configured to calculate the correlation between the performance value of each of the plurality of candidate signals and the parameter.

In operation S372, the electronic device 100 may select a waveform feature function and a time window, based on the analysis data corresponding to the correlation. For example, the processor 170 may be configured to select the waveform feature function and the time window having a high correlation coefficient with respect to the performance value. For example, the processor 170 may be configured to proportionately assign a probability to the waveform feature function and the time window such that a higher probability is assigned to the waveform feature function and the time window, as the performance value of the waveform feature function and the time window is more excellent. The processor 170 may be configured to perform, based on the assigned probability, a selection operation on the waveform feature function and the time window. According to an embodiment of the disclosure, the processor 170 may be configured to recalculate a waveform location function based on the selected waveform feature function and the selected time window.

In operation S373, the electronic device 100 may obtain a second parameter set by performing at least one of a cross-over operation or a mutation operation on at least one of the selected waveform feature function or the selected time window. For example, parameters corresponding to a waveform feature function having an excellent identification value and parameters corresponding to a waveform feature function having an excellent stability value may cross over each other. For example, the cross-over operation may be performed via any one of simple cross-over, k-point cross-over, uniform cross-over, or arithmetic cross-over. For example, parameters corresponding to a waveform feature function having both an excellent identification value and an excellent stability value may be transitioned by a predetermined probability. By performing the cross-over operation and the mutation operation, various waveform feature functions may be searched.

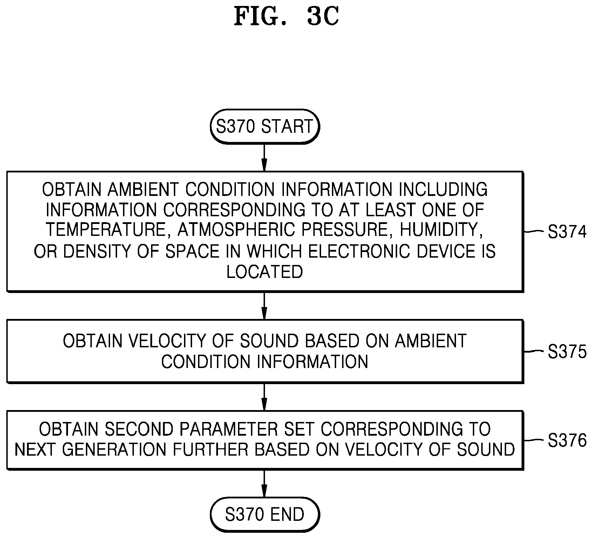

Referring to FIG. 3C, together with FIGS. 1 to 3A, operation S370 according to an embodiment of the disclosure may include operations S374 to S376. According to an embodiment of the disclosure, operations S374 to S376 may be performed by the electronic device 100 or the processor 170. Detailed operations of operation S370 are not limited to what are illustrated in FIG. 3C and any one of the operations illustrated in FIG. 3C may be omitted or the operations may further include operations not illustrated in FIG. 3C.

In operation S374, the electronic device 100 may obtain ambient condition information including information corresponding to at least one of a temperature, an atmospheric pressure, a humidity, or a density of a space in which the electronic device 100 is located.

In operation S375, the electronic device 100 may obtain a velocity of sound of the space, based on the ambient condition information.

In operation S376, the electronic device 100 may obtain the second parameter set corresponding to the next generation, based on the velocity of sound. For example, when a stability value is calculated based on a distance value, the electronic device 100 may calculate a relatively more precise stability value based on the velocity of sound according to a feature of the space.

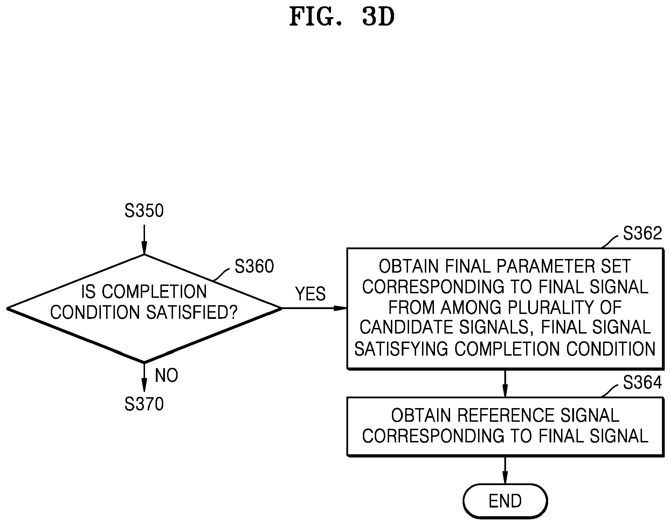

Referring to FIG. 3D, together with FIGS. 1 to 3A, the method, performed by the electronic device 100, of performing signal waveform optimization for localization, may further include operations S362 to S364. According to an embodiment of the disclosure, operations S362 to S364 may be performed by the electronic device 100 or the processor 170. In examples not according to the invention any one of the operations illustrated in FIG. 3D may be omitted. The operations illustrated in Fig. 3D may further include operations not illustrated in FIG. 3D.

When a completion condition is satisfied (yes), the procedure proceeds to operation S362. In operation S362, the electronic device 100 may obtain a final parameter set corresponding to a final signal satisfying the completion condition from among the plurality of candidate signals. The final parameter set may be stored in the memory 160 or a storage (not shown) of the electronic device 100 or in an external device.

In operation S364, the electronic device 100 may obtain a reference signal corresponding to the final signal. According to an embodiment of the disclosure, the electronic device 100 may output the final signal and may receive a reflected wave signal in a situation in which there is no change of the spatial structure, no change of the ambient condition, and no movement of the object. The electronic device 100 may generate the reference signal or values corresponding to the reference signal, based on the received reflected wave signal. The reference signal or the values corresponding to the reference signal may be stored in the memory 160 or the storage of the electronic device 100 or in the external device.

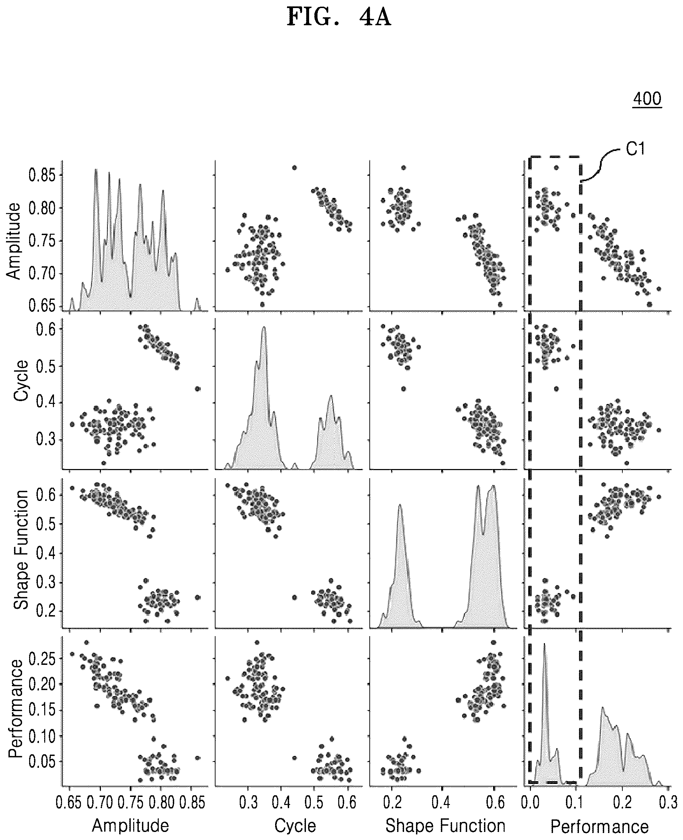

FIG. 4A is a conceptual diagram for describing a correlation according to an embodiment of the disclosure. Referring to FIG. 4A, together with FIGS. 1, 3A, and 3B, the electronic device 100 may generate analysis data 400 corresponding to the correlation. For example, the correlation may denote a correlation between the performance value and the plurality of parameters. FIG. 4A illustrates the analysis data having only a shape function, a cycle, and an amplitude as variables from among the plurality of parameters. However, the disclosure is not limited thereto, and the correlation may be analyzed by using, as variables, predetermined parameters indicating intrinsic features of a signal

The analysis data 400 is an example result of a correlation analysis between a normalized performance value, a shape function, a cycle, and an amplitude. For example, when an x axis is the performance value, and a y axis is the shape function, the analysis data 400 shows the result of the correlation analysis between the performance value and the shape function. When the x axis and the y axis have the same value as each other, the analysis data 400 shows a histogram of the corresponding value.

According to an embodiment of the disclosure, the electronic device 100 may calculate a correlation coefficient between the performance value and any one of the plurality of parameters (for example, the shape function, the cycle, the amplitude, etc.). When the correlation coefficient exceeds a pre-defined value (that is, the correlation coefficient is relatively high), the electronic device 100 may select, based on the analysis data 400, an area of the parameters having the high correlation coefficient, the area corresponding to the excellent performance value. Here, as the performance value is decreased, it may be assessed that the performance of the signal is more excellent. For example, a value of parameters corresponding to a case in which the performance value is less than a reference value (for example, 0.1) pre-defined or adaptively determined may be selected. For example, a cluster C1 indicates an area having a performance value that is less than 0.1. A value of the shape function corresponding to the cluster C1 may be 0.2 to 0.3, a value of the cycle may be 0.4 to 0.6, and a value of the amplitude may be 0.7 to 0.9. Thus, the electronic device 100 may select a waveform feature function and a time window having the excellent performance value from among the candidate signals.

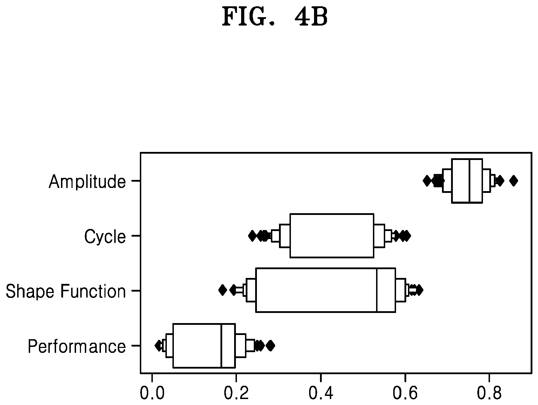

FIG. 4B is a conceptual diagram for describing a selection of a waveform location function, according to an embodiment of the disclosure. Referring to FIG. 4A, together with FIGS. 1, 3A, 3B, and 4A, the electronic device 100 may analyze data distribution with respect to the waveform feature function selected based on the analysis data 400. FIG. 4B illustrates a data distribution result as a box-and-whisker plot. However, the disclosure is not limited thereto, and the data distribution result may be indicated by any method of a data distribution analysis. The electronic device 100 may select the waveform location function based on the data distribution with respect to the selected waveform feature function. That is, a location of a signal corresponding to the waveform feature function, in a frequency domain and/or a time domain, may be determined.

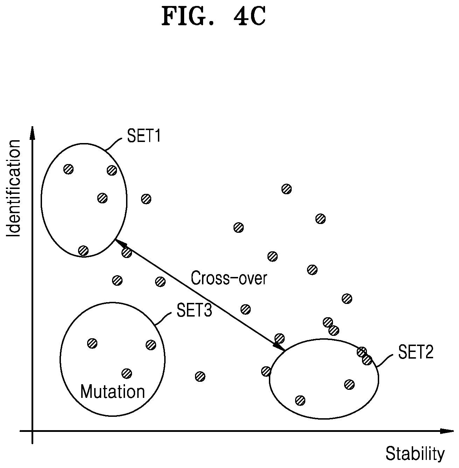

FIG. 4C is a scatter plot diagram for describing a cross-over operation and a mutation operation, according to an embodiment of the disclosure. Referring to FIG. 4C, together with FIGS. 1, 3A, and 3B, the scatter plot shows a stability value and an identification value of each of candidate signals. An x axis may correspond to a stability value, and a y axis may correspond to an identification value. According to an embodiment of the disclosure, the stability value and the identification value may be normalized values.

Here, as the stability value and the identification value are decreased, it may be assessed that the signal is excellent. However, the disclosure is not limited thereto. The electronic device 100 may select a first set, the stability value of the first set being less than a first reference value, select a second set, the identification value of the second set being less than a second reference value, and select a third set, the stability value of the third set being less than a third reference value and the identification value of the third set being less than a fourth reference value. The electronic device 100 may perform a cross-over operation on the first set and the second set. The electronic device 100 may perform a mutation operation on the third set.

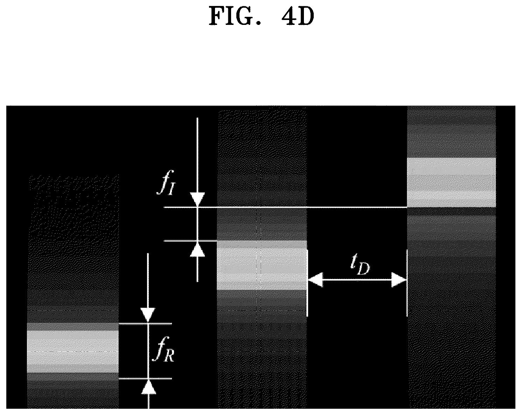

FIG. 4D is a conceptual diagram for describing a waveform location between candidate signals, according to an embodiment of the disclosure. Referring to FIG. 4C, together with FIGS. 1, 3A, 3B, 4A, and 4B, the electronic device 100 may locate the candidate signals on the frequency domain and the time domain, based on the waveform location function.

The electronic device 100 may control each of the candidate signals to be located at a frequency area f_{R} of the waveform location function. The frequency area f_{R} may denote a frequency band of a predetermined candidate signal from among the entire frequency bands (for example, 18 KHz to 20 KHz) of the candidate signals. The electronic device 100 may control the candidate signals to be output by having a latency to between two candidate signals. A second candidate signal consecutively output with respect to a first candidate signal may be output at an interval apart from the first candidate signal by the latency t_{D}. The electronic device 100 may control the candidate signals to be output by having a frequency interval f_{I} between two candidate signals. The frequency interval f_{I} may indicate a frequency difference between a frequency area of the first candidate signal and a frequency area of the second candidate signal.

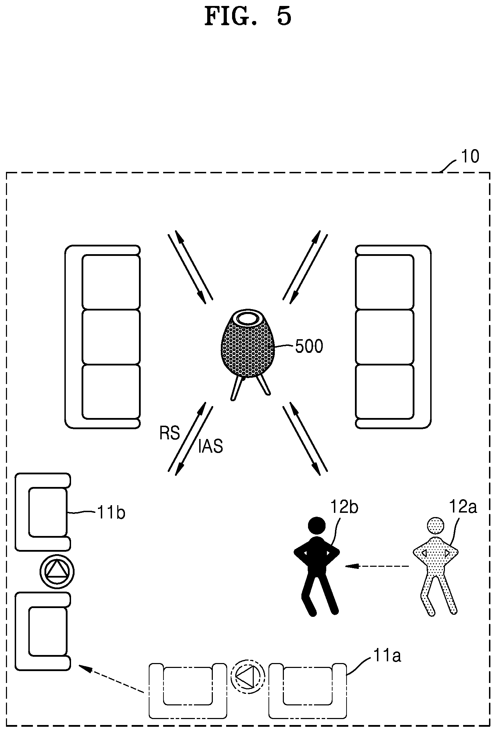

FIG. 5 is a conceptual diagram showing an example of a method, performed by an electronic device, of using a signal optimized for a spatial structure, according to an embodiment of the disclosure. For convenience of explanation, because the functions, configurations, and operations of the electronic device 100 of FIG. 1 are substantially the same as functions, configurations, and operations of an electronic device 500, descriptions about the same aspects are omitted. It is described hereinafter assuming that the electronic device 100 of FIG. 1 and the electronic device 500 are the same as each other.

Referring to FIG. 5, together with FIGS. 1 to 2C, the electronic device 500 may output an inaudible acoustic signal IAS. For example, the inaudible acoustic signal IAS may be a chirp signal. According to an embodiment of the disclosure, the electronic device 500 may output the inaudible acoustic signal IAS based on the final parameter set (that is, the sub-parameter set satisfying the completion condition) stored in a memory or a storage of the electronic device 500. According to an embodiment of the disclosure, the electronic device 100 may output the inaudible acoustic signal IAS based on the final parameter set obtained from the external device.

According to an embodiment of the disclosure, the electronic device 500 may include a plurality of speakers. The plurality of speakers may output different inaudible acoustic signals IAS. For example, a first speaker may output a first inaudible acoustic signal based on a first final parameter set, and a second speaker may output a second inaudible acoustic signal based on a second final parameter set. That is, each speaker of the electronic device 500 may output the inaudible acoustic signal IAS based on each final parameter set.

The electronic device 500 may receive a first reflected wave signal RS which is the output inaudible acoustic signal IAS reflected by the spatial structure 10. The electronic device 500 may divide the first reflected wave signal RS based on time windows. According to an embodiment of the disclosure, the electronic device 500 may include a plurality of microphones. Each of the plurality of microphones may receive the first reflected wave signal RS. The plurality of microphones may be arranged at different locations of the electronic device 500.

The electronic device 500 may obtain a signal change amount based on a correlation between a reference signal corresponding to the inaudible acoustic signal IAS and the received first reflected wave signal RS. The correlation may denote a temporal change of cross-correlation between signals. For example, when the correlation is high, it may be determined that the signal change amount is little, and when the correlation is low, it may be determined that the signal change amount is large.

When the signal change amount exceeds a pre-defined first threshold value, the electronic device 500 may determine that there is a movement of an object (for example, a human being) in the spatial structure 10. The first threshold value may be pre-defined as a signal change amount corresponding to the movement of the object. For example, when a human being at a first location 12a of the spatial structure 10 has moved to a second location 12b, the signal change amount may exceed the first threshold value. The electronic device 500 may obtain, based on the signal change amount, object location information corresponding to a location of the object in the spatial structure 10. That is, the electronic device 500 may perform localization with respect to the object.

According to an embodiment of the disclosure, the electronic device 500 may obtain distance information based on the first reflected wave signal RS. The electronic device 500 may output angle information by using a machine learning model having the distance information as an input. The machine learning model may be trained to output the angle information of the object by using the distance information of the object as an input.

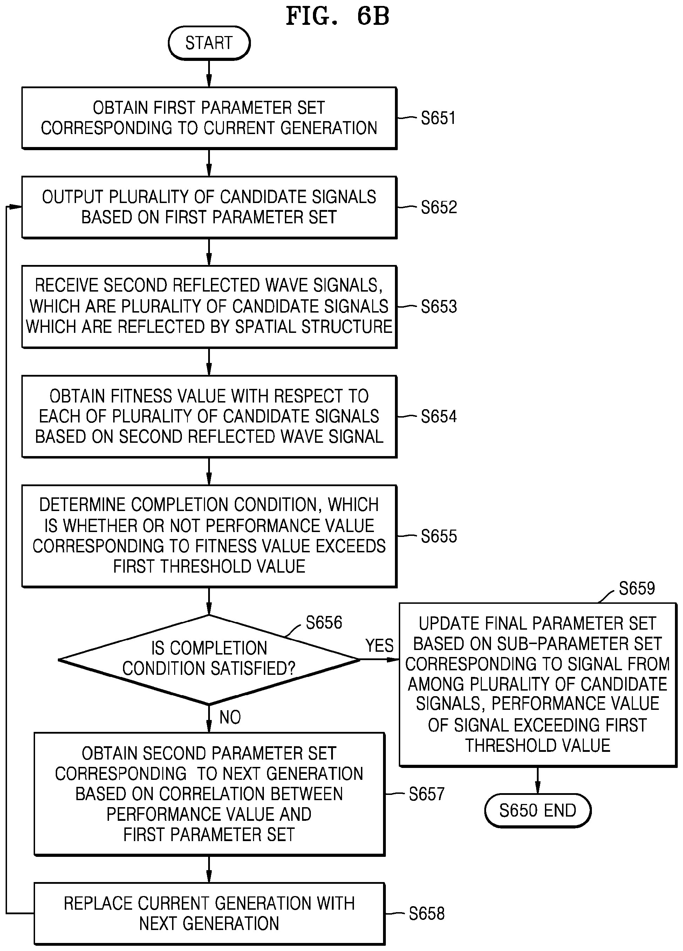

When the signal change amount exceeds a pre-defined second threshold value, the electronic device 500 may determine that there is a change in the spatial structure 10. The second threshold value may be pre-defined as a signal change amount corresponding to the change in the spatial structure 10. For example, when a piece of furniture arranged at a first location 11a of the spatial structure 10 is moved to a second location 11b, the signal change amount may exceed the second threshold value. For example, when an ambient condition (for example, a temperature) of the spatial structure 10 is changed, the signal change amount may exceed the second threshold value. The electronic device 500 may update the final parameter set corresponding to the inaudible acoustic signal, by using a waveform optimization model. Here, the waveform optimization model may denote the functions and operations of the electronic device 100 described with reference to FIGS. 1 to 4D. A method of updating the final parameter set by using the waveform optimization model is to be described in detail with reference to FIG. 6B.

The signal change amount corresponding to the movement of the object may be greater than the signal change amount corresponding to the change in the spatial structure 10. Thus, the first threshold value may be greater than the second threshold value. According to an embodiment of the disclosure, when the signal change amount exceeds the first threshold value, the electronic device may not determine a change in the spatial structure 10, even when the signal change amount exceeds the second threshold value.

According to an embodiment of the disclosure, the waveform optimization model may be trained to output the final parameter set by using the signal change amount and the ambient condition information as inputs.

According to an embodiment of the disclosure, the waveform optimization model may correspond to the waveform optimization method using the genetic algorithm described with reference to FIGS. 1 to 3D. Detailed configurations of the waveform optimization model is to be described in detail with reference to FIG. 6B.

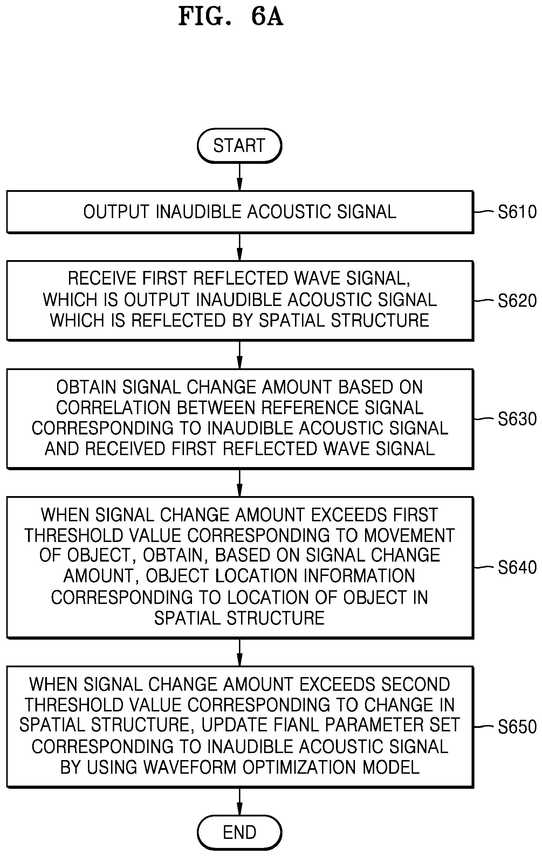

FIGS. 6A to 6C are flowcharts of a method of performing signal processing for localization, according to an embodiment of the disclosure. For convenience of explanation, the same aspects as described with reference to FIGS. 1 to 5 are not described.

Referring to FIG. 6A together with FIG. 5, the method, performed by the electronic device 100, of performing signal processing for localization, may include operations S610 to S650. According to an embodiment of the disclosure, operations S610 to S650 may be performed by the electronic device 500 or a processor of the electronic device 500. A method of performing signal processing for localization according to the disclosure is not limited to what are illustrated in FIG. 6A and may omit any one of the operations illustrated in FIG. 6A or further include operations not illustrated in FIG. 6A.

In operation S610, the electronic device 500 may output an inaudible acoustic signal. For example, the inaudible acoustic signal may correspond to the final signal described with reference to FIGS. 3A to 3D. The electronic device 500 may output the inaudible acoustic signal based on the final parameter set.

**In** operation S620, the electronic device 500 may receive a first reflected wave signal which is the output inaudible acoustic signal reflected by a spatial structure.

**In** operation S630, the electronic device 500 may obtain a signal change amount based on a correlation between a reference signal corresponding to the inaudible acoustic signal and the received first reflected wave signal.

**In** operation S640, when the signal change amount exceeds a first threshold value corresponding to a movement of an object, the electronic device 500 may obtain, based on the signal change amount, object location information corresponding to a location of the object in the spatial structure.

**In** operation S650, when the signal change amount exceeds a second threshold value corresponding to a change in the spatial structure, the electronic device 500 may update the final parameter set corresponding to the inaudible acoustic signal by using a waveform optimization model. According to an embodiment of the disclosure, when the signal change amount exceeds a third threshold value corresponding to a change in an ambient condition, the electronic device 500 may update the final parameter set corresponding to the inaudible acoustic signal by using the waveform optimization model.

Referring to FIG. 6B together with FIG. 5, operation S650 according to an embodiment of the disclosure may include operations S651 to S659. According to an embodiment of the disclosure, operations S651 to S659 may be performed by the electronic device 500 or a processor of the electronic device 500. Detailed operations of operation S650 are not limited to what are illustrated in FIG. 6B and any one of the operations illustrated in FIG. 6B may be omitted or the operations may further include operations not illustrated in FIG. 6B.

According to an embodiment of the disclosure, the operations illustrated in FIG. 6B may correspond to the operations illustrated in FIG. 3A. For example, operations S651 to S658 performed by the electronic device 500 may be substantially the same as operations S310 to S380 performed by the electronic device 100, and thus, the same aspects are not described. According to an embodiment of the disclosure, the operations illustrated in FIG. 6B may include at least one embodiment described with reference to FIGS. 1 to 5.

In operation S656, when the completion condition is satisfied, the procedure may proceed to operation S659. In operation S659, the electronic device 500 may update the final parameter set based on a sub-parameter set corresponding to a signal, a performance value of the signal exceeding a first threshold value, from among a plurality of candidate signals. According to an embodiment of the disclosure, the electronic device 500 may output the inaudible acoustic signal based on the updated final parameter set.

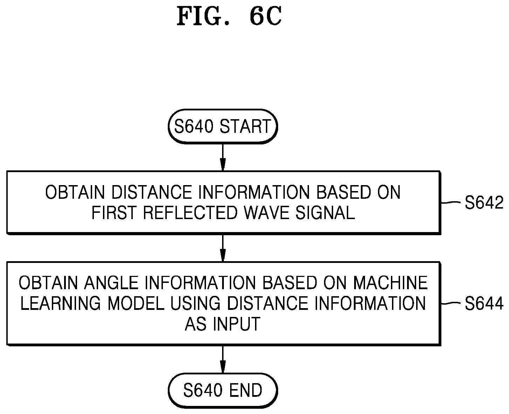

Referring to FIG. 6C together with FIG. 5, operation S640 according to an embodiment of the disclosure may include operations S642 to S644. According to an embodiment of the disclosure, operations S642 to S644 may be performed by the electronic device 500 or a processor of the electronic device 500. Detailed operations of operation S640 are not limited to what are illustrated in FIG. 6C and may omit any one of the operations illustrated in FIG. 6C or further include operations not illustrated in FIG. 6C.

In operation S642, the electronic device 500 may obtain distance information corresponding to a distance of the object, based on the first reflected wave signal. For example, the distance information may be obtained through a cross-correlation analysis between the first reflected wave signal and the inaudible acoustic signal.

In operation S644, the electronic device 500 may obtain angle information based on a machine learning model having the distance information as an input. The electronic device 500 may load a trained machine learning model into the memory. The trained machine learning model may be configured to output the angle information based on the distance information. According to an embodiment of the disclosure, the electronic device 500 may obtain the object location information in the spatial structure 10, based on the distance information and the angle information.

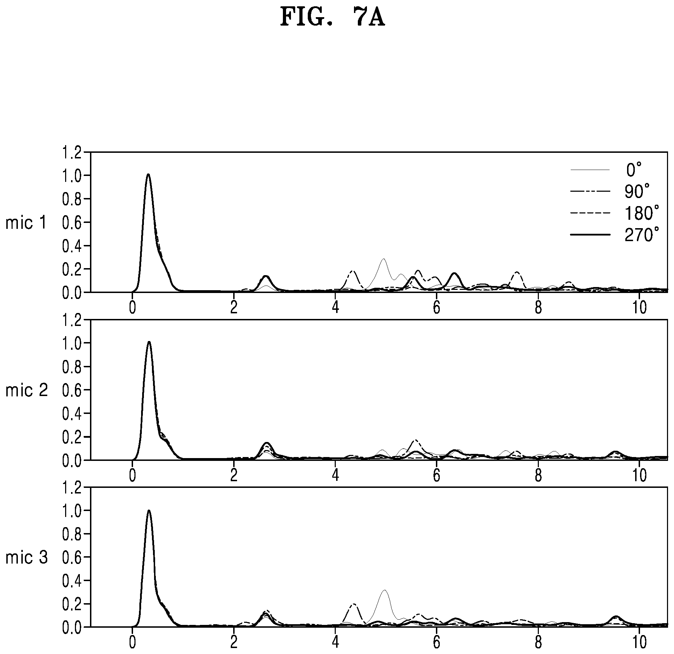

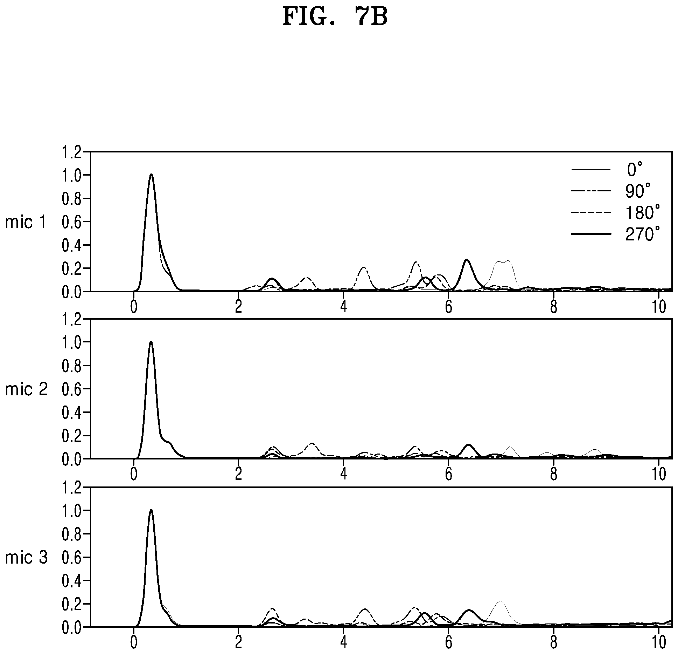

FIGS. 7A and 7B are graphs showing examples of an intensity of a reflected wave signal, according to an embodiment of the disclosure. Referring to FIGS. 7A and 7B, together with FIG. 5, the electronic device 500 may include a first microphone mic 1, a second microphone mic 2, and a third microphone mic 3. However, the number of microphones of the electronic device 500 is not limited thereto. Locations of the first to third microphones mic 1 to mic 3 in the electronic device 500 may be different from each other. For example, an x axis may correspond to a time, and a y axis may correspond to an intensity of a reflected wave signal received by each of the first to third microphones mic 1 to mic 3. The electronic device 500 may be rotated by a predetermined angle (for example, 90°, 180°, or 270°) based on a predetermined axis. It is to be described hereinafter assuming that a case where the electronic device 500 is not rotated corresponds to a case where the electronic device 500 is rotated by a first angle 0°. That is, the reflected wave signal of the case where the electronic device 500 is rotated by the first angle 0° may be defined as a reference signal.

FIG. 7A shows examples of intensities of reflected wave signals received by the microphones, when a location of the electronic device 500 in the spatial structure 10 is not changed, and only the electronic device 500 is rotated by a predetermined angle. FIG. 7B shows examples of intensities of reflected wave signals received by the microphones, when a location of the electronic device 500 in the spatial structure 10 is changed, and simultaneously, the electronic device 500 is rotated by a predetermined angle. The electronic device 500 may determine whether or not to update a final parameter set corresponding to an inaudible acoustic signal, based on a signal change amount between the reference signal and the reflected wave signal.

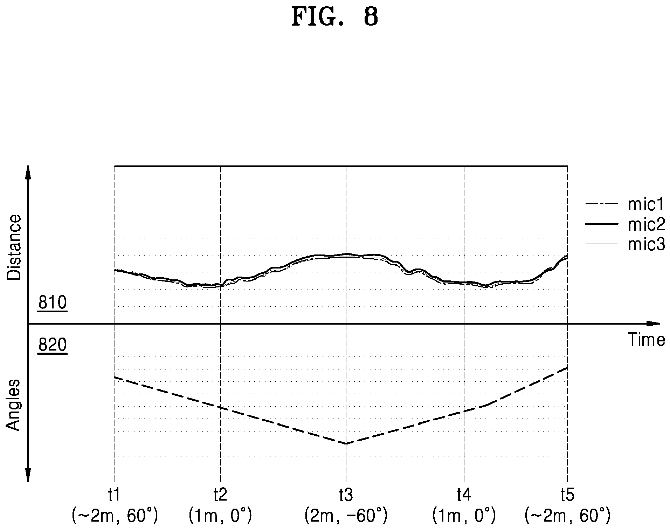

FIG. 8 is a graph showing an example of a machine learning model for obtaining object location information, according to an embodiment of the disclosure. Referring to FIG. 8, together with FIGS. 5 and 6B, there may be a movement of an object (for example, 12a) in the spatial structure 10. The object (for example, 12a) may move from a first time point t1 to a fifth time point t5 by having a predetermined angle and a predetermined distance with respect to the electronic device 500. The electronic device 500 may obtain distance information corresponding to the distance of the object, based on each of the reflected wave signals received by the first to third microphones mic 1, mic 2, and mic 3.

For convenience of explanation, it is to be described below assuming that angle information corresponds to an angle between the electronic device 500 and the object on a plane on which the electronic device 500 is arranged, and the distance information corresponds to the distance between the electronic device 500 and the object. For example, at the first time point t1, the object (for example, 12a) is apart from the electronic device 500 by a distance of about 2 m and an angle of about 60°, at the second time point t2, the object (for example, 12a) is apart from the electronic device 500 by a distance of about 1 m and an angle of about 0°, at the third time point t3, the object (for example, 12a) is apart from the electronic device 500 by a distance of about 2 m and an angle of about -60°, at the fourth time point t4, the object (for example, 12a) is apart from the electronic device 500 by a distance of about 1 m and an angle of about 0°, and at the fifth time point t5, the object (for example, 12a) is apart from the electronic device 500 by a distance of about 2 m and an angle of about 60°.

The electronic device 500 may train the machine learning model by using the distance information as an input and the angle information corresponding to the distance information as a ground truth. However, the disclosure is not limited thereto, and the machine learning model may be trained by an external device. The electronic device 500 may use the trained machine learning model. For example, the electronic device 500 may obtain (or infer) the angle information based on the machine learning model having the distance information as an input. Thus, the electronic device 500 may obtain (or infer) the object location information in the spatial structure 10 based on the distance information and the angle information.

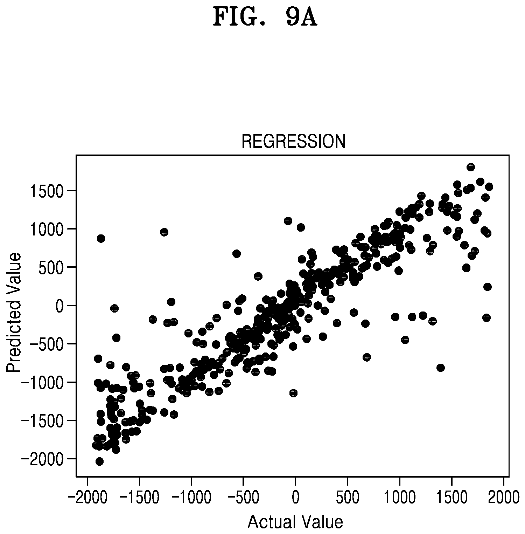

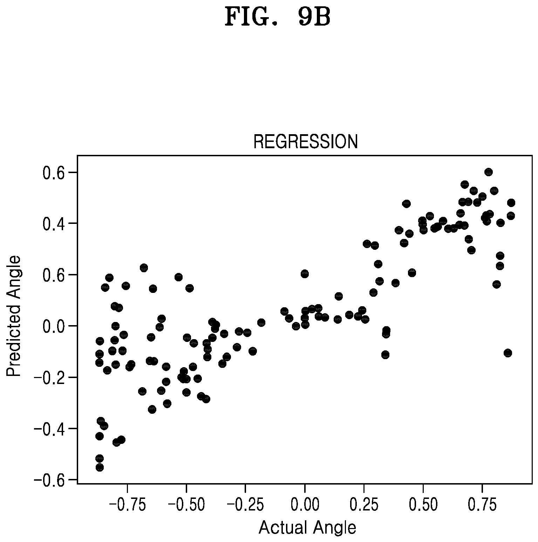

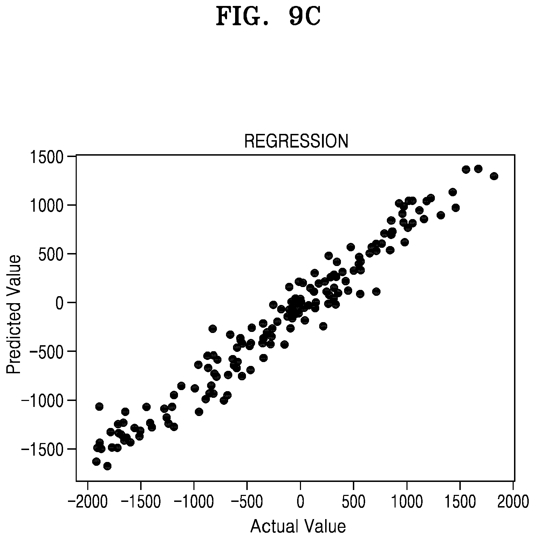

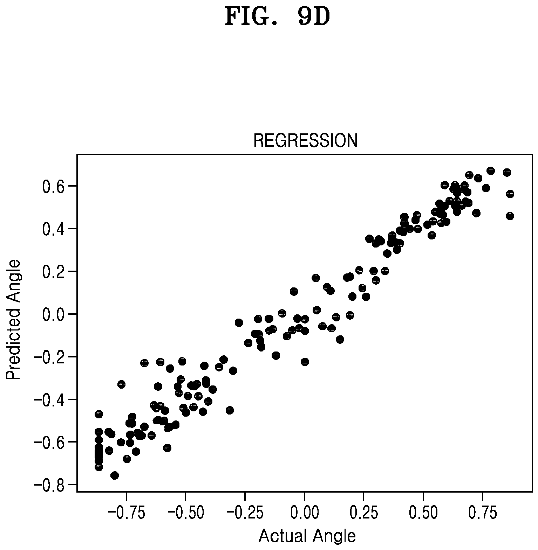

FIGS. 9A to 9D are graphs showing examples of a result of localization, according to an embodiment of the disclosure. Referring to FIGS. 9A to 9D, together with FIGS. 1 to 8, an x axis corresponds to an actual value, and a y axis corresponds to a prediction value (a distance value corresponding to the distance information or an angle value corresponding to the angle information). FIGS. 9A and 9B show a correlation between the actual value and the prediction value when the inaudible acoustic signal is not optimized, according to an embodiment of the disclosure. FIGS. 9C and 9D show a correlation between the actual value and the prediction value when the inaudible acoustic signal is optimized, according to an embodiment of the disclosure. A correlation coefficient of the graphs of FIGS. 9C and 9D is higher than a correlation coefficient of the graphs of FIGS. 9A and 9B. That is, the accuracy of localization is relatively increased in the case in which the inaudible acoustic single is optimized by using a waveform optimization model, according to an embodiment of the disclosure.

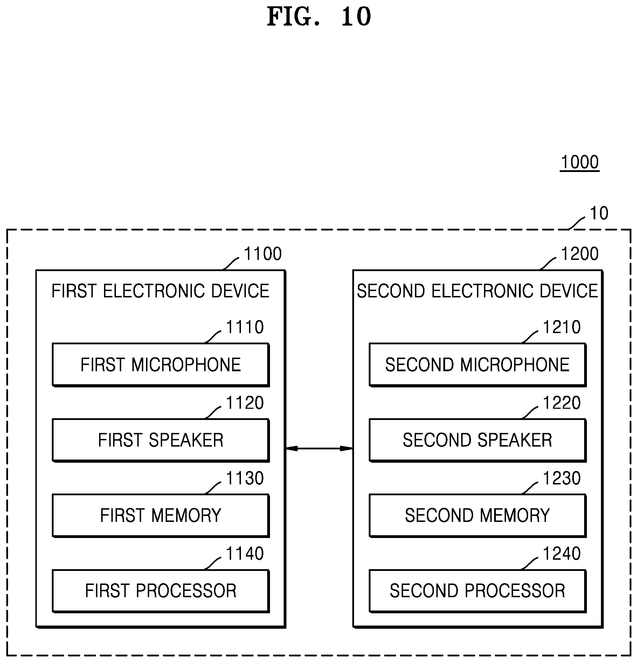

FIG. 10 is a block diagram of an example of a system according to an embodiment of the disclosure. A system 1000 for localization (hereinafter, a system) may include a first electronic device 1100 and a second electronic device 1200.

Referring to FIG. 10, the first electronic device 1100 may include a first microphone 1110, a first speaker 1120, a first memory 1130, and a first processor 1140. Similarly, the second electronic device 1200 may include a second microphone 1210, a second speaker 1220, a second memory 1230, and a second processor 1240.

The first and second electronic devices 1100 and 1200 may have substantially the same configurations, functions, and operations as the electronic device 100 of FIG. 1 or the electronic device 500 of FIG. 5, and thus, the same aspects as described with reference to FIGS. 1 to 9D are not described hereinafter. For example, the first and second microphones 1110 and 1210 may have substantially the same configurations, functions, and operations as the microphone 140 of FIG. 1, the first and second speakers 1120 and 1220 may have substantially the same configurations, functions, and operations as the speaker 130 of FIG. 1, the first and second memories 1130 and 1230 may have substantially the same configurations, functions, and operations as the memory 160 of FIG. 1, and the first and second processors 1140 and 1240 may have substantially the same configurations, functions, and operations as the processor 170 of FIG. 1.

The first speaker 1120 may be configured to output a first inaudible acoustic signal. The first processor 1140 may be configured to control the first speaker 1120 to output the first inaudible acoustic signal.

The first microphone 1110 may be configured to receive a first reflected wave signal, which is the output first inaudible acoustic signal which is reflected by a spatial structure. The first processor 1140 may be configured to control the first microphone 1110 to receive the first inaudible acoustic signal.

The first processor 1140 may be configured to obtain a first signal change amount based on a correlation between at least one of the first reflected wave signal received by the first microphone 1110 or the first inaudible acoustic signal received by the second electronic device 1200, and a first reference signal corresponding to the first inaudible acoustic signal. Here, the first reference signal may denote a signal for a reference of a comparison with respect to the first reflected wave signal received by the first microphone 1110 or the first inaudible acoustic signal received by the second electronic device 1200, and the first reference signal may be pre-defined. The first reference signal may vary according to an object of the comparison (for example, the first reflected wave signal or the first inaudible acoustic signal).

According to an embodiment of the disclosure, the second microphone 1210 of the second electronic device 1200 may receive the first inaudible acoustic signal. The second electronic device 1200 may transmit data corresponding to the received first inaudible acoustic signal to the first electronic device 1100.

When the first signal change amount exceeds a first threshold value corresponding to a movement of an object, the first processor 1140 may be configured to obtain object location information corresponding to a location of the object in the spatial structure, based on the first signal change amount.

When the first signal change amount exceeds a second threshold value corresponding to a change in the spatial structure, the first processor 1140 may be configured to update a first final parameter set corresponding to the first inaudible acoustic signal by using a waveform optimization model.

According to an embodiment of the disclosure, the first processor 1140 may be configured to obtain device location information corresponding to a location of the first electronic device 1100 and a location of the second electronic device 1200, based on at least one of the first reflected wave signal received by the first microphone 1110 or the first inaudible acoustic signal received by the second electronic device 1200.

According to an embodiment of the disclosure, the first processor 1140 may be configured to select, based on the object location information and the device location information, a wake-up device to respond to a first user voice input corresponding to a wake-up keyword. According to an embodiment of the disclosure, at least one of the first microphone 1110 or the second microphone 1210 may be configured to receive the first user voice input. According to an embodiment of the disclosure, the wake-up device may be the first electronic device 1100 or the second electronic device 1200. According to the disclosure, by selecting one of the plurality of electronic devices (for example, the first electronic device 1100 and the second electronic device 1200) as the wake-up device, the problem of waking-up all of the plurality of electronic devices may be absolved.

According to an embodiment of the disclosure, the wake-up device may be configured to wake-up in response to the first user voice input. The wake-up device may be configured to respond to a second user voice input after the first user voice input. For example, the second user voice input may correspond to a command for controlling at least one of the first electronic device 1100 or the second electronic device 1200.

According to an embodiment of the disclosure, the second speaker 1220 may be configured to output a second inaudible acoustic signal. The second microphone 1210 may be configured to receive a second reflected wave signal, which is the output second inaudible acoustic signal reflected by the spatial structure 10, and the first inaudible acoustic signal output by the first speaker 1120. The second processor 1240 may be configured to obtain a second signal change amount based on a correlation between at least one of the second reflected wave signal received by the second microphone 1210 or the second inaudible acoustic signal received by the first microphone 1110, and a second reference signal corresponding to a final inaudible acoustic signal. Here, the second reference signal may denote a signal for a reference of a comparison with respect to the second reflected wave signal received by the second microphone 1210 or the second inaudible acoustic signal received by the first electronic device 1100 and may be pre-defined. The second reference signal may vary according to an object of the comparison (for example, the second reflected wave signal or the second inaudible acoustic signal).

When the second signal change amount exceeds the first threshold value, the second processor 1240 may be configured to obtain the object location information based on the second signal change amount. When the second signal change amount exceeds the second threshold value, the second processor 1240 may be configured to update a second final parameter set corresponding to the second inaudible acoustic signal by using the waveform optimization model.

According to an embodiment of the disclosure, the first processor 1140 may be configured to obtain a first parameter set corresponding to a first current generation. The first processor 1140 may be configured to control, based on the first parameter set, the first speaker 1120 to output a plurality of first candidate signals. The first processor 1140 may be configured to control the first microphone 1110 to receive first reflected wave signals which are the plurality of first candidate signals reflected by the spatial structure. The first processor 1140 may be configured to obtain first data corresponding to the plurality of first candidate signals received by the second microphone 1210. For example, the second electronic device 1200 may transmit the first data to the first electronic device 1100. The first processor 1140 may be configured to obtain a first fitness value with respect to the plurality of first candidate signals, based on the first reflected wave signal and the first data. The first processor 1140 may be configured to identify a first completion condition, which is whether or not a first performance value corresponding to the first fitness value exceeds the first threshold value. When the first completion condition is not satisfied, the first processor 1140 may be configured to obtain, based on a correlation between the first performance value and the first parameter set, a second parameter set corresponding to a first next generation.

According to an embodiment of the disclosure, each of the plurality of first candidate signals may include a direct signal and an indirect signal. The direct signal and the indirect signal may be located in different frequency bands from each other. For example, a first frequency band of the direct signal may be different from a second frequency band of the indirect signal. The direct signal may be a signal to be received by the second electronic device 1200. The direct signal may be a signal directly emitted from the first electronic device 1100 toward the second electronic device 1200. The indirect signal may be a signal emitted to the spatial structure. The indirect signal may be emitted in all directions of the first electronic device 1100. The indirect signal may be a signal to be reflected by the spatial structure and received by the first electronic device 1100.

According to an embodiment of the disclosure, the first processor 1140 may be configured to measure, based on the first reflected wave signals, the first fitness value corresponding to the indirect signal emitted to the spatial structure. According to an embodiment of the disclosure, the first processor 1140 may be configured to measure, based on the first data, the first fitness value corresponding to the direct signal received by the second microphone 1210.

According to an embodiment of the disclosure, when the first completion condition is satisfied, the first processor 1140 may be configured to obtain a final parameter set corresponding to a final signal, the first performance value of the final signal exceeding the first threshold value, from among the plurality of first candidate signals. The first processor 1140 may be configured to obtain a reference signal corresponding to the second reflected wave signal which is the final signal reflected by the spatial structure. According to an embodiment of the disclosure, the final signal may include a direct signal and an indirect signal.

According to an embodiment of the disclosure, the second processor 1240 may be configured to obtain a third parameter set corresponding to a second current generation. The second processor 1240 may be configured to control, based on the third parameter set, the second speaker 1220 to output a plurality of third candidate signals. The second processor 1240 may be configured to control the second microphone 1210 to receive third reflected wave signals which are the plurality of third candidate signals reflected by the spatial structure.

According to an embodiment of the disclosure, the first processor 1140 may be configured to obtain, from the second electronic device 1200, third data corresponding to third reflected wave signals. The first processor 1140 may be configured to obtain, based on the third data, a second fitness value with respect to the plurality of third candidate signals. The first processor 1140 may be configured to identify a second completion condition, which is whether or not a second performance value corresponding to the second fitness value exceeds the first threshold value. When the second completion condition is not satisfied, the first processor 1140 may be configured to obtain, based on a correlation between the second performance value and the third parameter set, a fourth parameter set corresponding to a second next generation. When the second completion condition is not satisfied, the first processor 1140 may be configured to replace the second current generation with the second next generation.

According to an embodiment of the disclosure, the second processor 1240 may be configured to obtain the second fitness value with respect to the plurality of third candidate signals, based on the third data. The second processor 1240 may be configured to identify the second completion condition, which is whether or not the second performance value corresponding to the second fitness value exceeds the first threshold value. When the second completion condition is not satisfied, the second processor 1240 may be configured to obtain, based on the correlation between the second performance value and the third parameter set, the fourth parameter set corresponding to the second next generation. When the second completion condition is not satisfied, the second processor 1240 may be configured to replace the second current generation with the second next generation.

Although not shown, the system 1000 may include n (n is a natural number) electronic devices. For example, the system 1000 may further include a third electronic device (not shown), and the third electronic device may have substantially the same configurations, functions, and operations as the first electronic device 1100 or the second electronic device 1200.

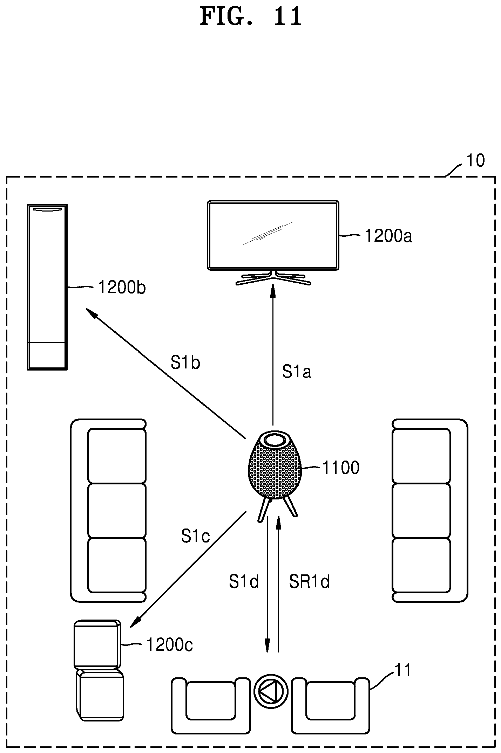

FIG. 11 is a conceptual diagram showing an example of a method, performed by a system, of generating a signal optimized for a spatial structure, according to an embodiment of the disclosure. According to an embodiment of the disclosure, the system 1000 may include the first electronic device 1100 and one or more second electronic devices (for example, 1200a, 1200b, and 1200c).

Referring to FIG. 1, together with FIG. 10, the first electronic device 1100 may obtain a first parameter set corresponding to a first current generation. The first speaker 1120 may be configured to output a plurality of first candidate signals (for example, S1a, S1b, S1c, S1c, and S1d) based on the first parameter set. According to an embodiment of the disclosure, the number of first speakers 1120 may be n, and the n first speakers may output signals in different directions from each other. For example, any one of the n first speakers may output the candidate signal S1a toward the second electronic device 1200a, another one of the n first speakers may output the candidate signal S1b toward the second electronic device 1200b, another one of the n first speakers may output the candidate signal S1c toward the second electronic device 1200c, and the remaining one of the n first speakers may emit the candidate signal S1d to the spatial structure 10. That is, the first electronic device 1100 may output separate signals toward the second electronic devices (for example, 1200a, 1200b, and 1200c). At least one first microphone 1110 may be configured to receive first reflected wave signals SR1d, which are the plurality of first candidate signals (for example, S1d) reflected by the spatial structure 10.

The second electronic device (for example, 1200a) may include at least one second microphone 1210. The at least one second microphone 1210 may be configured to receive the plurality of first candidate signals (for example, S1a). The second electronic device (for example, 1200a) may generate first data corresponding to the received plurality of first candidate signals (for example, S1a). The first electronic device 1100 may obtain or receive the first data from the second electronic device (for example, 1200a).

The first electronic device 1100 may obtain a first fitness value with respect to the plurality of first candidate signals (for example, S1a, S1b, S1c, and S1d), based on the first reflected wave signals SR1d and the first data. According to an embodiment of the disclosure, the first electronic device 1100 may measure, based on the first reflected wave signals SR1d, the first fitness value corresponding to an indirect signal emitted to the spatial structure 10. Here, the indirect signal may correspond to the candidate signal S1d. The first electronic device 1100 may measure, based on the first data, the first fitness value corresponding to a direct signal. Here, the direct signal may correspond to the candidate signals (for example, S1a, S1b, and S1c). According to an embodiment of the disclosure, a frequency band of the direct signal may be different from a frequency band of the indirect signal.

The first electronic device 1110 may identify a first completion condition, which is whether or not a first performance value corresponding to the first fitness value exceeds a first threshold value. When the first completion condition is not satisfied, the first electronic device 1110 may obtain, based on a correlation between the first performance value and the first parameter set, a second parameter set corresponding to a first next generation.

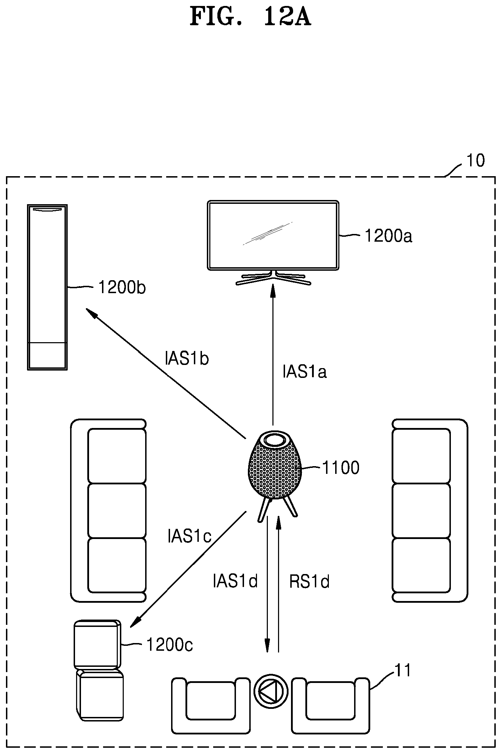

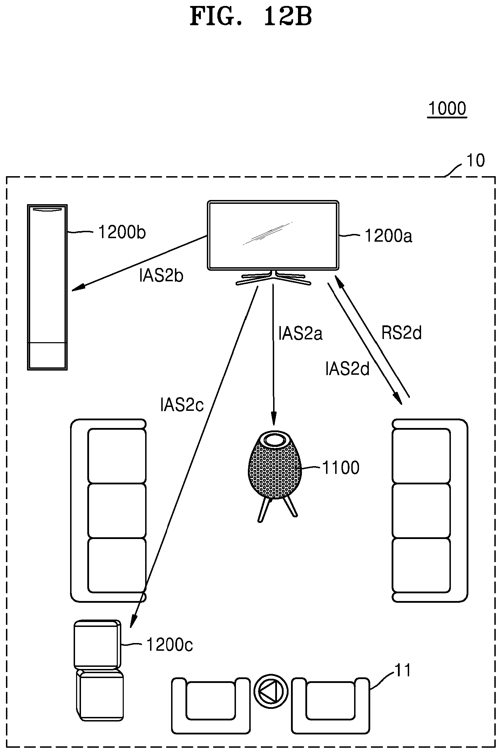

FIGS. 12A and 12B are conceptual diagrams showing an example of a method, performed by a system, of using a signal optimized for a spatial structure, according to an embodiment of the disclosure. Referring to FIGS. 12A, together with FIGS. 10 and 11, when the first completion condition is satisfied, the first electronic device 1100 may obtain a final parameter set corresponding to final signals (for example, IAS1a, IAS1b, IAS1c, and IAS1d) satisfying the first completion condition from among the plurality of first candidate signals (for example, S1a, S1b, S1c, and S1d). The final signal may include direct signals IAS1a, IAS1b, and IAS1c and an indirect signal IAS1d. The first electronic device 1100 may obtain a second reflected wave signal RS1d which is the indirect signal IAS1d reflected by the spatial structure 10.

According to an embodiment of the disclosure, the first electronic device 1100 may obtain device location information corresponding to a location of the first electronic device 1100 and locations of the second electronic devices (for example, 1200a, 1200b, and 1200c), based on at least one of the second reflected wave signal RS1d received by the first electronic device 1100 or the final signals (for example, IAS1a, IAS1b, and IAS1c) received by the second electronic devices (for example, 1200a, 1200b, and 1200c).

Referring to FIG. 12B, together with FIGS. 10 and 11, the second electronic devices (for example, 1200a, 1200b, and 1200c) may obtain a third parameter set corresponding to a second current generation. The second electronic devices (for example, 1200a, 1200b, and 1200c) may output a plurality of third candidate signals based on the third parameter set. The second electronic devices (for example, 1200a, 1200b, and 1200c) may obtain a second fitness value with respect to the plurality of third candidate signals, based on third reflected wave signals. The second electronic devices (1200a, 1200b, and 1200c) may identify a second completion condition, which is whether or not a second performance value corresponding to the second fitness value exceeds the first threshold value. When the completion condition is not satisfied, the second electronic devices (for example, 1200a, 1200b, and 1200c) may obtain a fourth parameter set corresponding to a second next generation, based on a correlation between the second performance value and the third parameter set. When the completion condition is satisfied, the second electronic devices (for example, 1200a, 1200b, and 1200c) may obtain a final parameter set corresponding to final signals (for example, IAS2a, IAS2b, IAS2c, and IAS2d) satisfying the first completion condition from among the plurality of third candidate signals. The final signal may include direct signals IAS2a, IAS2b, and IAS2c and an indirect signal IAS2d. The second electronic devices (for example, 1200a, 1200b, and 1200c) may obtain a third reflected wave signal RS2d, which is the indirect signal IAS2d reflected by the spatial structure 10. Thus, when there are the plurality of second electronic devices (for example, 1200a, 1200b, and 1200c) in the spatial structure 10, the second electronic devices (for example, 1200a, 1200b, and 1200c) may each output a different final signal.

According to an embodiment of the disclosure, the first electronic device 1100 may obtain device location information corresponding to a location of the first electronic device 1100 and locations of the second electronic devices (for example, 1200a, 1200b, and 1200c), based on at least one of the second reflected wave signal RS1d received by the first electronic device 1100, the final signals (for example, IAS1a, IAS1b, and IAS1c) received by the second electronic devices (for example, 1200a, 1200b, and 1200c), or the third reflected wave signal RS2d received by the second electronic devices (for example, 1200a, 1200b, and 1200c).

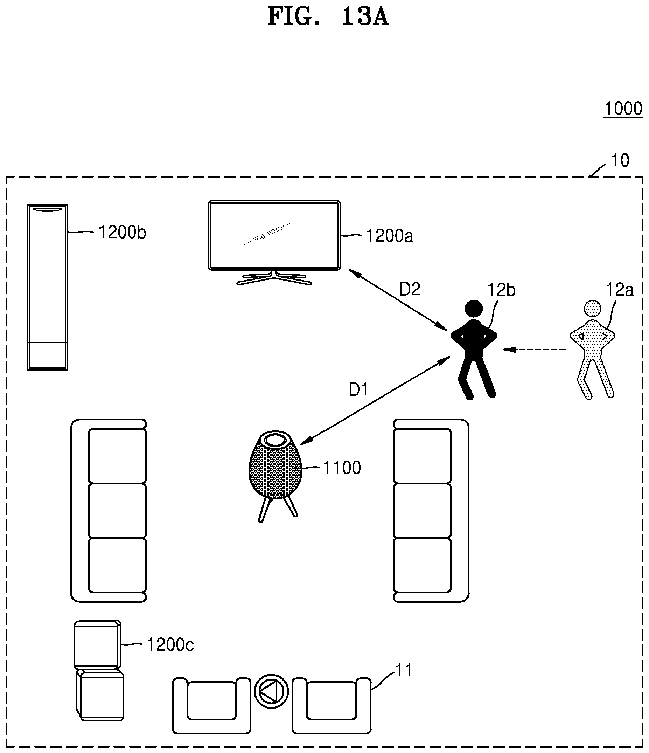

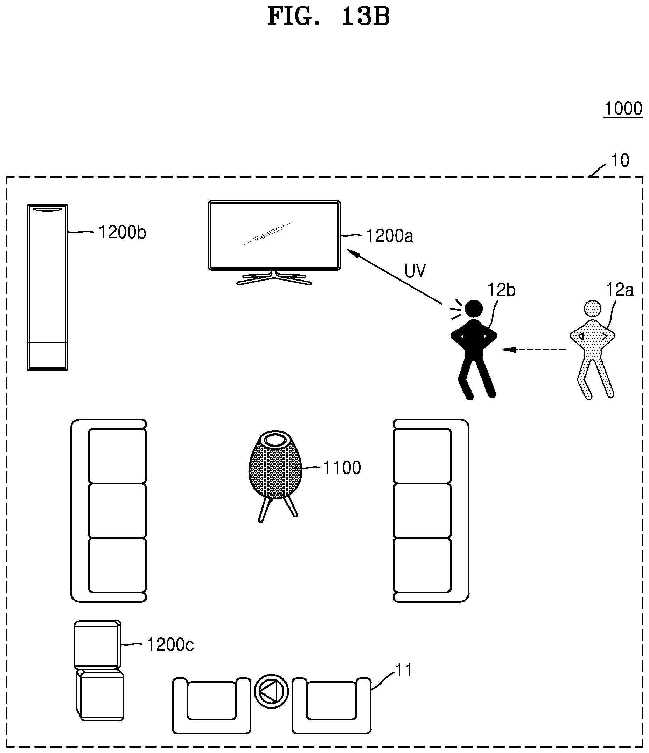

FIGS. 13A and 13B are conceptual diagrams showing an example of a method, performed by a system, of selecting a wake-up device, according to an embodiment of the disclosure. Referring to FIG. 13A, together with FIGS. 10 to 12B, it is to be described hereinafter assuming that a person at a first location 12a has moved to a second location 12b. The first electronic device 1100 and/or the second electronic devices (for example, 1200a, 1200b, and 1200c) may localize the person in a spatial structure in real time by using a final signal. For example, it may be inferred that a distance between the first electronic device 1100 and the second location 12b at which the person is located corresponds to a first distance D1, and a distance between the second electronic device 1200a and the second location 12b at which the person is located corresponds to a second distance D2.

Referring to FIG. 13B, together with FIGS. 1 to 13A, the first electronic device 100 and the second electronic devices (for example, 1200a, 1200b, and 1200c) may receive a sentence including a wake-up keyword uttered by the person at the second location 12b as a first user voice (UV) input. The first electronic device 1100 may select a wake-up device to respond to the first user voice input, based on the object location information and the device location information. For example, a device having a relatively less distance from the second location 12b at which the person is located, as included in the object location information, may be selected as the wake-up device. For example, when the second distance D2 is less than the first distance D1, the wake-up device may be the second electronic device 1200a. For example, when the first distance D1 is less than the second distance D2, the wake-up device may be the first electronic device 1100. Thus, even when the plurality of devices receive the first user voice input, only one device may respond to the first user voice input.

According to an embodiment of the disclosure, the selected wake-up device may be configured to wake-up in response to the first user voice input. The selected wake-up device may be configured to receive a second user voice input after the first user voice input.

According to an embodiment of the disclosure, a machine-readable storage medium may be provided in a form of a non-transitory storage medium. Here, the "non-transitory storage medium" only denotes a tangible device, not including a signal (for example, electromagnetic waves), and the term does not distinguish a case where data is stored in the storage medium semi-permanently from a case where data is stored in the storage medium temporarily. For example, the "non-transitory storage medium" may include a buffer in which data is temporarily stored.

According to an embodiment of the disclosure, a method according to various embodiments disclosed in the present specification may be provided by being included in a computer program product. The computer program product may be transacted between a seller and a purchaser, as a product. The computer program product may be distributed in a form of machine-readable storage medium (for example, a CD-ROM), or distributed (for example, downloaded or uploaded) through an application store or directly or online between two user devices (for example, smart phones). In the case of the online distribution, at least a part of the computer program product (e.g., a downloadable application) may be at least temporarily stored in a machine-readable storage medium, such as a server of a manufacturer, a server of an application store, or a memory of a relay server, or may be temporarily generated.

According to various embodiments of the disclosure, an electronic device may adaptively generate a signal optimized for a spatial structure and perform localization of an object in the spatial structure based on the optimized signal.

According to various embodiments of the disclosure, an electronic device may perform localization of an object with high accuracy using ambient condition information including at least one of a temperature, an atmospheric pressure, a humidity, or a density of a space in which the electronic device is located.

It is apparent to one of ordinary skill in the art that the electronic devices according to various embodiments of the present disclosure as described above are not limited to the above-described embodiments and those shown in the drawings, and various changes, modifications, or alterations may be made thereto without departing from the scope of the present invention as defined by the appended set of claims.

## Claims

1. An electronic device (100) configured to perform localization, the electronic device comprising:
a speaker (130);
one or more microphones (140);
a memory (160) storing one or more instructions; and
one or more processors (170) configured to execute the one or more instructions stored in the memory to perform signal waveform optimization for the localization, the signal waveform optimization comprising the operations:
(a) obtain a first parameter set corresponding to a current generation;
(b) control the speaker (130) to output a plurality of candidate signals based on the first parameter set, wherein the plurality of candidate signals are acoustic signals of an inaudible frequency band that are not recognized by the hearing sense of a human being;
(c) control the one or more microphones (140) to receive first reflected wave signals which are the plurality of candidate signals reflected by a spatial structure;
(d) obtain a fitness value with respect to each of the plurality of candidate signals based on the first reflected wave signals;
(e) determine a completion condition indicating whether or not a performance value based on the fitness value with respect to each of the plurality of candidate signals exceeds a first threshold value;
(f) based on the completion condition being not satisfied, obtain a second parameter set corresponding to a next generation based on a correlation between the performance value and the first parameter set;
(g) based on the completion condition being not satisfied, iteratively perform the operations of (b) to (f) by replacing the current generation with the next generation; and
(h) based on the completion condition being satisfied, obtain a final parameter set corresponding to a final signal from among the plurality of candidate signals, the performance value of the final signal exceeding the first threshold value, and obtain a reference signal corresponding to the final signal.

2. The electronic device (100) of claim 1, wherein at least one of the first parameter set or the second parameter comprises a plurality of sub-parameter sets corresponding to one of the plurality of candidate signals, and
wherein at least one of the plurality of sub-parameter sets or the final parameter set comprises at least one of a waveform feature function, a waveform location function, or a time window of a signal corresponding to the sub-parameter sets or the final parameter set,
wherein the waveform feature function comprises a value of at least one of an amplitude, a cycle, or a shape of the corresponding signal, and
wherein the waveform location function comprises a value of at least one of a frequency range, a frequency interval, or a latency of the corresponding signal.

3. The electronic device (100) of any one of the preceding claims, wherein the fitness value comprises a stability value and an identification value,
wherein the stability value is a similarity value between a measurement value of any one of the first reflected wave signals corresponding to a first time point and a measurement value of the first reflected wave signal corresponding to a second time point, and
wherein the identification value is a signal similarity value between any one of the plurality of candidate signals and the first reflected wave signal corresponding to the candidate signal.

4. The electronic device (100) of claim 3, wherein the performance value is a return value of a decision function having the stability value and the identification value of each of the plurality of candidate signals as variables, and
wherein the decision function is configured to return the performance value by applying a weight to any one of the stability value and the identification value.

5. The electronic device (100) of any one of claims 3 and 4, wherein the one or more processors are further configured to execute the one or more instructions to:
obtain analysis data corresponding to the correlation;
select the waveform feature function and the time window based on the analysis data and the performance value; and
obtain the second parameter set by performing at least one of a cross-over operation or a mutation operation on at least one of the selected waveform feature function or the selected time window.

6. A method of performing signal waveform optimization for localization, the method being performed by an electronic device (100) and the method comprising:
(a) obtaining a first parameter set corresponding to a current generation;
(b) controlling a speaker (130) of the electronic device (100) to output a plurality of candidate signals based on the first parameter set, wherein the plurality of candidate signals are acoustic signals of an inaudible frequency band that are not recognized by the hearing sense of a human being;
(c) controlling one or more microphones (140) of the electronic device (100) to receive first reflected wave signals which are the plurality of candidate signals reflected by a spatial structure;
(d) obtaining a fitness value with respect to each of the plurality of candidate signals based on the first reflected wave signals;
(e) determining a completion condition indicating whether or not a performance value based on the fitness value with respect to each of the plurality of candidate signals exceeds a first threshold value;
(f) based on the completion condition being not satisfied, obtaining a second parameter set corresponding to a next generation based on a correlation between the performance value and the first parameter set;
(g) based on the completion condition being not satisfied, iteratively performing the operations of (b) to (f) by replacing the current generation with the next generation; and
(h) based on the completion condition being satisfied, obtaining a final parameter set corresponding to a final signal from among the plurality of candidate signals, the performance value of the final signal exceeding the first threshold value, and obtaining a reference signal corresponding to the final signal.

7. The method of claim 6, wherein at least one of the first parameter set or the second parameter comprises a plurality of sub-parameter sets corresponding to one of the plurality of candidate signals, and
wherein at least one of the plurality of sub-parameter sets or the final parameter set comprises at least one of a waveform feature function, a waveform location function, or a time window of a signal corresponding to the sub-parameter sets or the final parameter set,
wherein the waveform feature function comprises a value of at least one of an amplitude, a cycle, or a shape of the corresponding signal, and
wherein the waveform location function comprises a value of at least one of a frequency range, a frequency interval, or a latency of the corresponding signal.

8. The method of claim 6 or 7, wherein the fitness value comprises a stability value and an identification value,
wherein the stability value is a similarity value between a measurement value of any one of the first reflected wave signals corresponding to a first time point and a measurement value of the first reflected wave signal corresponding to a second time point, and
wherein the identification value is a signal similarity value between any one of the plurality of candidate signals and the first reflected wave signal corresponding to the candidate signal.

9. The method of claim 8, wherein the performance value is a return value of a decision function having the stability value and the identification value of each of the plurality of candidate signals as variables, and
wherein the decision function is configured to return the performance value by applying a weight to any one of the stability value and the identification value.

10. The method of claim 8 or 9, wherein the method further comprising:
obtaining analysis data corresponding to the correlation;
selecting the waveform feature function and the time window based on the analysis data and the performance value; and
obtaining the second parameter set by performing at least one of a cross-over operation or a mutation operation on at least one of the selected waveform feature function or the selected time window.

## Patentansprüche

1. Elektronische Vorrichtung (100), die zur Durchführung einer Lokalisierung konfiguriert ist, wobei die elektronische Vorrichtung Folgendes umfasst:
einen Lautsprecher (130);
ein oder mehrere Mikrofone (140);
einen Speicher (160), in dem ein oder mehrere Befehle gespeichert sind; und
einen oder mehrere Prozessoren (170), die dazu konfiguriert sind, den einen oder die mehreren im Speicher gespeicherten Befehle auszuführen, um eine Signalwellenformoptimierung für die Lokalisierung durchzuführen, wobei die Signalwellenformoptimierung die folgenden Operationen umfasst:
(a) Erhalten eines ersten Parametersatzes, der einer aktuellen Generation entspricht;
(b) Steuern des Lautsprechers (130), um auf der Grundlage des ersten Parametersatzes eine Vielzahl von Kandidatensignalen auszugeben, wobei die Vielzahl von Kandidatensignalen akustische Signale eines unhörbaren Frequenzbandes sind, die vom Hörsinn eines Menschen nicht erkannt werden;
(c) Steuern des einen oder der mehreren Mikrofone (140), um erste reflektierte Wellensignale zu empfangen, bei denen es sich um die Vielzahl von Kandidatensignalen handelt, die von einer räumlichen Struktur reflektiert werden;
(d) Erhalten eines Fitnesswerts in Bezug auf jedes der mehreren Kandidatensignale auf der Grundlage der ersten reflektierten Wellensignale;
(e) Bestimmen einer Abschlussbedingung, die angibt, ob ein Leistungswert basierend auf dem Fitnesswert in Bezug auf jedes der Vielzahl von Kandidatensignalen einen ersten Schwellenwert überschreitet oder nicht;
(f) basierend darauf, dass die Abschlussbedingung nicht erfüllt ist, Erhalten eines zweiten Parametersatzes, der einer nächsten Generation entspricht, auf der Grundlage einer Korrelation zwischen dem Leistungswert und dem ersten Parametersatz;
(g) basierend darauf, dass die Abschlussbedingung nicht erfüllt ist, iteratives Durchführen der Operationen von (b) bis (f) durch Ersetzen der aktuellen Generation durch die nächste Generation; und
(h) basierend darauf, dass die Abschlussbedingung erfüllt ist, Erhalten eines endgültigen Parametersatzes, der einem endgültigen Signal aus der Vielzahl von Kandidatensignalen entspricht, wobei der Leistungswert des endgültigen Signals den ersten Schwellenwert überschreitet, und Erhalten eines Referenzsignals, das dem endgültigen Signal entspricht.

2. Elektronische Vorrichtung (100) nach Anspruch 1, wobei mindestens einer von dem ersten Parametersatz und dem zweiten Parametersatz eine Vielzahl von Unterparametersätzen umfasst, die einem der Vielzahl von Kandidatensignalen entsprechen, und
wobei mindestens eines von der Vielzahl von Unterparametersätzen und dem endgültigen Parametersatz mindestens eines von einer Wellenform-Merkmalsfunktion, einer Wellenform-Ortsfunktion und einem Zeitfenster eines Signals, das den Unterparametersätzen oder dem endgültigen Parametersatz entspricht, umfasst,
wobei die Wellenform-Merkmalsfunktion einen Wert mindestens eines von einer Amplitude, einem Zyklus und einer Form des entsprechenden Signals umfasst, und
wobei die Wellenform-Ortsfunktion einen Wert mindestens eines von einem Frequenzbereich, einem Frequenzintervall und einer Latenz des entsprechenden Signals umfasst.

3. Elektronische Vorrichtung (100) nach einem der vorstehenden Ansprüche, wobei der Fitnesswert einen Stabilitätswert und einen Identifikationswert umfasst,
wobei der Stabilitätswert ein Ähnlichkeitswert zwischen einem Messwert eines beliebigen der ersten reflektierten Wellensignale, das einem ersten Zeitpunkt entspricht, und einem Messwert des ersten reflektierten Wellensignals, das einem zweiten Zeitpunkt entspricht, ist, und
wobei der Identifikationswert ein Signalähnlichkeitswert zwischen einem beliebigen der Vielzahl von Kandidatensignalen und dem dem Kandidatensignal entsprechenden ersten reflektierten Wellensignal ist.

4. Elektronische Vorrichtung (100) nach Anspruch 3, wobei der Leistungswert ein Rückgabewert einer Entscheidungsfunktion ist, die den Stabilitätswert und den Identifikationswert jedes der Vielzahl von Kandidatensignalen als Variablen aufweist, und
wobei die Entscheidungsfunktion dazu konfiguriert ist, den Leistungswert durch Anwenden einer Gewichtung auf einen beliebigen von dem Stabilitätswert und dem Identifikationswert zurückzugeben.

5. Elektronische Vorrichtung (100) nach einem der Ansprüche 3 und 4, wobei der eine oder die mehreren Prozessoren ferner dazu konfiguriert sind, den einen oder die mehrere Befehle auszuführen, um:
Analysedaten zu erhalten, die der Korrelation entsprechen;
die Wellenform-Merkmalsfunktion und das Zeitfenster auf der Grundlage der Analysedaten und des Leistungswerts auszuwählen; und
den zweiten Parametersatz zu erhalten, indem mindestens eine von einer Cross-Over-Operation und einer Mutationsoperation an mindestens einem von der ausgewählten Wellenform-Merkmalsfunktion und dem ausgewählten Zeitfenster durchgeführt wird.

6. Verfahren zur Durchführung einer Signalwellenformoptimierung für Lokalisierung, wobei das Verfahren von einer elektronischen Vorrichtung (100) durchgeführt wird und Folgendes umfasst:
(a) Erhalten eines ersten Parametersatzes, der einer aktuellen Generation entspricht;
(b) Steuern eines Lautsprechers (130) der elektronischen Vorrichtung (100), um auf der Grundlage des ersten Parametersatzes eine Vielzahl von Kandidatensignalen auszugeben, wobei die Vielzahl von Kandidatensignalen akustische Signale eines unhörbaren Frequenzbands sind, die vom Hörsinn eines Menschen nicht erkannt werden;
(c) Steuern eines oder mehrerer Mikrofone (140) der elektronischen Vorrichtung (100), um erste reflektierte Wellensignale zu empfangen, bei denen es sich um die Vielzahl von Kandidatensignalen handelt, die von einer räumlichen Struktur reflektiert werden;
(d) Erhalten eines Fitnesswerts in Bezug auf jedes der Vielzahl von Kandidatensignalen auf der Grundlage der ersten reflektierten Wellensignale;
(e) Bestimmen einer Abschlussbedingung, die angibt, ob ein Leistungswert basierend auf dem Fitnesswert in Bezug auf jedes der Vielzahl von Kandidatensignalen einen ersten Schwellenwert überschreitet oder nicht;
(f) basierend darauf, dass die Abschlussbedingung nicht erfüllt ist, Erhalten eines zweiten Parametersatzes, der einer nächsten Generation entspricht, auf der Grundlage einer Korrelation zwischen dem Leistungswert und dem ersten Parametersatz;
(g) basierend darauf, dass die Abschlussbedingung nicht erfüllt ist, iteratives Durchführen der Operationen von (b) bis (f) durch Ersetzen der aktuellen Generation durch die nächste Generation; und
(h) basierend darauf, dass die Abschlussbedingung erfüllt ist, Erhalten eines endgültigen Parametersatzes, der einem endgültigen Signal aus der Vielzahl von Kandidatensignalen entspricht, wobei der Leistungswert des endgültigen Signals den ersten Schwellenwert überschreitet, und Erhalten eines Referenzsignals, das dem endgültigen Signal entspricht.

7. Verfahren nach Anspruch 6, wobei mindestens einer von dem ersten Parametersatz und dem zweiten Parametersatz eine Vielzahl von Unterparametersätzen umfasst, die einem der Vielzahl von Kandidatensignalen entsprechen, und
wobei mindestens eines von der Vielzahl von Unterparametersätzen und dem endgültigen Parametersatz mindestens eines von einer Wellenform-Merkmalsfunktion, einer Wellenform-Ortsfunktion und einem Zeitfenster eines Signals, das den Unterparametersätzen oder dem endgültigen Parametersatz entspricht, umfasst,
wobei die Wellenform-Merkmalsfunktion einen Wert mindestens eines von einer Amplitude, einem Zyklus und einer Form des entsprechenden Signals umfasst, und
wobei die Wellenform-Ortsfunktion einen Wert mindestens eines von einem Frequenzbereich, einem Frequenzintervall und einer Latenz des entsprechenden Signals umfasst.

8. Verfahren nach Anspruch 6 oder 7, wobei der Fitnesswert einen Stabilitätswert und einen Identifikationswert umfasst,
wobei der Stabilitätswert ein Ähnlichkeitswert zwischen einem Messwert eines beliebigen der ersten reflektierten Wellensignale, das einem ersten Zeitpunkt entspricht, und einem Messwert des ersten reflektierten Wellensignals, das einem zweiten Zeitpunkt entspricht, ist, und
wobei der Identifikationswert ein Signalähnlichkeitswert zwischen einem beliebigen der Vielzahl von Kandidatensignalen und dem dem Kandidatensignal entsprechenden ersten reflektierten Wellensignal ist.

9. Verfahren nach Anspruch 8, wobei der Leistungswert ein Rückgabewert einer Entscheidungsfunktion ist, die den Stabilitätswert und den Identifikationswert jedes der Vielzahl von Kandidatensignalen als Variablen aufweist, und
wobei die Entscheidungsfunktion dazu konfiguriert ist, den Leistungswert durch Anwenden einer Gewichtung auf einen beliebigen von dem Stabilitätswert und dem Identifikationswert zurückzugeben.

10. Verfahren nach Anspruch 8 oder 9, wobei das Verfahren ferner Folgendes umfasst:
Erhalten von Analysedaten, die der Korrelation entsprechen;
Auswählen der Wellenform-Merkmalsfunktion und des Zeitfensters auf der Grundlage der Analysedaten und des Leistungswerts; und
Erhalten des zweiten Parametersatzes durch Durchführen mindestens einer von einer Cross-Over-Operation und einer Mutationsoperation an mindestens einem von der ausgewählten Wellenform-Merkmalsfunktion und dem ausgewählten Zeitfenster.

## Revendications

1. Dispositif électronique (100) configuré pour effectuer un emplacement, le dispositif électronique comprenant :
un haut-parleur (130);
un ou plusieurs microphones (140);
une mémoire (160) stockant une ou plusieurs instructions; et
un ou plusieurs processeurs (170) configurés pour exécuter les une ou plusieurs instructions stockées dans la mémoire afin d'effectuer une optimisation de forme d'onde de signal pour l'emplacement, l'optimisation de forme d'onde de signal comprenant les opérations suivantes :
(a) obtenir un premier ensemble de paramètres correspondant à une génération actuelle;
(b) commander le haut-parleur (130) pour délivrer une pluralité de signaux candidats sur la base du premier ensemble de paramètres, dans lequel la pluralité de signaux candidats sont des signaux acoustiques d'une bande de fréquences inaudible qui ne sont pas reconnus par le sens de l'ouïe d'un être humain;
(c) commander les un ou plusieurs microphones (140) pour recevoir des premiers signaux d'onde réfléchie qui sont la pluralité de signaux candidats réfléchis par une structure spatiale;
(d) obtenir une valeur d'aptitude par rapport à chacun de la pluralité de signaux candidats sur la base des premiers signaux d'onde réfléchie;
(e) déterminer une condition d'achèvement indiquant si une valeur de performance basée sur la valeur d'aptitude par rapport à chacun de la pluralité de signaux candidats dépasse ou non une première valeur seuil;
(f) sur la base du fait que la condition d'achèvement n'est pas satisfaite, obtenir un deuxième ensemble de paramètres correspondant à une génération suivante sur la base d'une corrélation entre la valeur de performance et le premier ensemble de paramètres;
(g) sur la base du fait que la condition d'achèvement n'est pas satisfaite, effectuer de manière itérative les opérations (b) à (f) en remplaçant la génération actuelle par la génération suivante; et
(h) sur la base du fait que la condition d'achèvement est satisfaite, obtenir un ensemble final de paramètres correspondant à un signal final parmi la pluralité de signaux candidats, la valeur de performance du signal final dépassant la première valeur seuil, et obtenir un signal de référence correspondant au signal final.

2. Dispositif électronique (100) selon la revendication 1, dans lequel au moins l'un du premier ensemble de paramètres ou du deuxième paramètre comprend une pluralité de sous-ensembles de paramètres correspondant à l'un de la pluralité de signaux candidats, et
dans lequel au moins l'un de la pluralité de sous-ensembles de paramètres ou de l'ensemble final de paramètres comprend au moins l'un d'une fonction de caractéristique de forme d'onde, d'une fonction d'emplacement de forme d'onde ou d'une fenêtre temporelle d'un signal correspondant aux sous-ensembles de paramètres ou à l'ensemble final de paramètres,
dans lequel la fonction de caractéristique de forme d'onde comprend une valeur d'au moins l'un d'une amplitude, d'un cycle ou d'une forme du signal correspondant, et
dans lequel la fonction d'emplacement de forme d'onde comprend une valeur d'au moins l'un d'une plage de fréquences, d'un intervalle de fréquences ou d'une latence du signal correspondant.

3. Dispositif électronique (100) selon l'une quelconque des revendications précédentes, dans lequel la valeur d'aptitude comprend une valeur de stabilité et une valeur d'identification,
dans lequel la valeur de stabilité est une valeur de similarité entre une valeur de mesure de l'un quelconque des premiers signaux d'onde réfléchie correspondant à un premier instant et une valeur de mesure du premier signal d'onde réfléchie correspondant à un deuxième instant, et
dans lequel la valeur d'identification est une valeur de similarité de signal entre l'un quelconque de la pluralité de signaux candidats et le premier signal d'onde réfléchie correspondant au signal candidat.

4. Dispositif électronique (100) selon la revendication 3, dans lequel la valeur de performance est une valeur de retour d'une fonction de décision ayant comme variables la valeur de stabilité et la valeur d'identification de chacun de la pluralité de signaux candidats, et
dans lequel la fonction de décision est configurée pour renvoyer la valeur de performance en appliquant un poids à l'une quelconque de la valeur de stabilité et de la valeur d'identification.

5. Dispositif électronique (100) selon l'une quelconque des revendications 3 et 4, dans lequel les un ou plusieurs processeurs sont en outre configurés pour exécuter les une ou plusieurs instructions afin de :
obtenir des données d'analyse correspondant à la corrélation;
sélectionner la fonction de caractéristique de forme d'onde et la fenêtre temporelle sur la base des données d'analyse et de la valeur de performance; et
obtenir le deuxième ensemble de paramètres en effectuant au moins l'une d'une opération de croisement ou d'une opération de mutation sur au moins l'une de la fonction de caractéristique de forme d'onde sélectionnée ou de la fenêtre temporelle sélectionnée.

6. Procédé d'exécution d'une optimisation de forme d'onde de signal pour un emplacement, le procédé étant exécuté par un dispositif électronique (100) et le procédé comprenant :
(a) l'obtention d'un premier ensemble de paramètres correspondant à une génération actuelle;
(b) la commande d'un haut-parleur (130) du dispositif électronique (100) pour délivrer une pluralité de signaux candidats sur la base du premier ensemble de paramètres, dans lequel la pluralité de signaux candidats sont des signaux acoustiques d'une bande de fréquences inaudible qui ne sont pas reconnus par le sens de l'ouïe d'un être humain;
(c) la commande d'un ou plusieurs microphones (140) du dispositif électronique (100) pour recevoir des premiers signaux d'onde réfléchie qui sont la pluralité de signaux candidats réfléchis par une structure spatiale;
(d) l'obtention d'une valeur d'aptitude par rapport à chacun de la pluralité de signaux candidats sur la base des premiers signaux d'onde réfléchie;
(e) la détermination d'une condition d'achèvement indiquant si une valeur de performance basée sur la valeur d'aptitude par rapport à chacun de la pluralité de signaux candidats dépasse ou non une première valeur seuil;
(f) sur la base du fait que la condition d'achèvement n'est pas satisfaite, l'obtention d'un deuxième ensemble de paramètres correspondant à une génération suivante sur la base d'une corrélation entre la valeur de performance et le premier ensemble de paramètres;
(g) sur la base du fait que la condition d'achèvement n'est pas satisfaite, l'exécution de manière itérative des opérations (b) à (f) en remplaçant la génération actuelle par la génération suivante; et
(h) sur la base du fait que la condition d'achèvement est satisfaite, l'obtention d'un ensemble final de paramètres correspondant à un signal final parmi la pluralité de signaux candidats, la valeur de performance du signal final dépassant la première valeur seuil, et l'obtention d'un signal de référence correspondant au signal final.

7. Procédé selon la revendication 6, dans lequel au moins l'un du premier ensemble de paramètres ou du deuxième paramètre comprend une pluralité de sous-ensembles de paramètres correspondant à l'un de la pluralité de signaux candidats, et
dans lequel au moins l'un de la pluralité de sous-ensembles de paramètres ou de l'ensemble final de paramètres comprend au moins l'un d'une fonction de caractéristique de forme d'onde, d'une fonction d'emplacement de forme d'onde ou d'une fenêtre temporelle d'un signal correspondant aux sous-ensembles de paramètres ou à l'ensemble final de paramètres,
dans lequel la fonction de caractéristique de forme d'onde comprend une valeur d'au moins l'un d'une amplitude, d'un cycle ou d'une forme du signal correspondant, et
dans lequel la fonction d'emplacement de forme d'onde comprend une valeur d'au moins l'un d'une plage de fréquences, d'un intervalle de fréquences ou d'une latence du signal correspondant.

8. Procédé selon la revendication 6 ou 7, dans lequel la valeur d'aptitude comprend une valeur de stabilité et une valeur d'identification,
dans lequel la valeur de stabilité est une valeur de similarité entre une valeur de mesure de l'un quelconque des premiers signaux d'onde réfléchie correspondant à un premier instant et une valeur de mesure du premier signal d'onde réfléchie correspondant à un deuxième instant, et
dans lequel la valeur d'identification est une valeur de similarité de signal entre l'un quelconque de la pluralité de signaux candidats et le premier signal d'onde réfléchie correspondant au signal candidat.

9. Procédé selon la revendication 8, dans lequel la valeur de performance est une valeur de retour d'une fonction de décision ayant comme variables la valeur de stabilité et la valeur d'identification de chacun de la pluralité de signaux candidats, et
dans lequel la fonction de décision est configurée pour renvoyer la valeur de performance en appliquant un poids à l'une quelconque de la valeur de stabilité et de la valeur d'identification.

10. Procédé selon la revendication 8 ou 9, dans lequel le procédé comprend en outre :
l'obtention de données d'analyse correspondant à la corrélation;
la sélection de la fonction de caractéristique de forme d'onde et de la fenêtre temporelle sur la base des données d'analyse et de la valeur de performance; et
l'obtention du deuxième ensemble de paramètres en effectuant au moins l'une d'une opération de croisement ou d'une opération de mutation sur au moins l'une de la fonction de caractéristique de forme d'onde sélectionnée ou de la fenêtre temporelle sélectionnée.
